# EUROPÄISCHE PATENTANMELDUNG

(11) **EP 2 266 725 A2**
(43) Veröffentlichungstag der Anmeldung: **29.12.2010**
(21) Anmeldenummer: 10012580.6
(22) Anmeldetag: 19.01.2005
(51) Int. Cl.: B21K 1/70, F16B 37/06

(54) **Hohlkörperelement**

(30) Priorität: 29.01.2004 DE 102004004589; 17.09.2004 DE 102004045159
(62) Teilanmeldung aus: 05001054.5
(71) Anmelder: Profil Verbindungstechnik GmbH & Co. KG, 61381 Friedrichsdorf (DE)
(72) Erfinder: Babej, Jiri, 35423 Lich (DE); Humpert, Richard, 61191 Rosbach v.d.H. (DE); Vieth, Michael, 61118 Bad Vibel (DE)
(74) Vertreter: Manitz, Finsterwald & Partner GbR

(57) **Zusammenfassung**

Ein Hohlkörperelement (21,21') zur Anbringung an ein insbesondere aus Blech bestehendes Bauteil (292), wobei das Hohlkörperelement (21,21') auf zwei entgegengesetzten Seiten parallel zueinander erstreckende Balken (7,8), die mit dem Bauteil eine Verdrehsicherung bilden und eine senkrecht zur Bauteilseite verlaufende, mittig angeordnete Lochung (23) aufweist, die gegebenenfalls einen Gewindezylinder (29) aufweisen kann, zeichnet sich dadurch aus, dass auf der dem Bauteil (292) zugewandten Seite des Hohlkörperelementes (21,21') und konzentrisch zur Lochung ein ringförmiger Vorsprung (25) vorliegt, der als Stanzabschnitt ohne Hinterschneidung ausgebildet ist, dass zwischen den Balken (7,8) und dem ringförmigen Stanzabschnitt ein vertiefter Bereich vorliegt, wobei Balken (7,8) nur auf zwei entgegengesetzten Seiten der Hohlkörperelements (21,21') vorhanden sind und Anlageflächen für das Bauteil (292) bilden, die so groß sind, dass die Flächenpressung unter der Fließgrenze des Bauteils (292) liegt und dass auch die Balken (7,8) keine Hinterschneidung mit dem vertieften Bereich bilden, wobei auf der Bauteilseite des Hohlkörperelementes (21,21') die Stirnseite des ringförmigen Vorsprungs (25) vorzugsweise weiter vorsteht als die Balken (7,8).

## Beschreibung

Die vorliegende Erfindung betrifft ein Verfahren zur Herstellung von Hohlkörperelementen, wie Mutterelemente, zur Anbringung an üblicherweise aus Blech bestehenden Bauteilen, insbesondere zur Herstellung von Hohlkörperelementen mit einem zumindest im Wesentlichen quadratischen oder rechteckigen Außenumriss durch Ablängung einzelner Elemente von einem in Form einer Profilstange oder eines Wickels vorliegenden Profil nach vorheriger Stanzung von Löchern in das Profil, gegebenenfalls mit anschließender Ausbildung eines Gewindezylinders unter Anwendung eines Folgeverbundwerkzeugs mit mehreren Arbeitsstationen, in denen jeweilige Bearbeitungen durchgeführt werden. Weiterhin betrifft die vorliegende Erfindung ein Profil zur Anwendung in einem solchen Verfahren, Hohlkörperelemente, die nach dem Verfahren hergestellt werden sowie ein Folgeverbundwerkzeug zum Durchführen des Verfahrens.

Ein Verfahren der eingangs genannten Art sowie entsprechende Hohlkörperelemente sind beispielsweise aus der WO 01/72449 A2 bekannt. Ein ähnliches Verfahren ist auch aus der US-A-4,971499 bekannt. Rechteckige Hohlkörperelemente werden auch von der Firma Profil Verbindungstechnik GmbH & Co. KG in Deutschland unter der Bezeichnung HI-Rechteckmutter verkauft.

Aufgabe der vorliegenden Erfindung ist es, das Verfahren der eingangs genannten Art so weiter zu entwickeln, dass Hohlkörperelemente, insbesondere rechteckige Mutterelemente, preisgünstig hergestellt werden können. Ferner sollten die Hohlkörperelemente mechanische Eigenschaften haben, die denen der Hohlkörperelemente, die nach der WO 01/72449 A2 oder nach dem deutschen Gebrauchsmuster 202 05 192.7 herstellt werden, mindestens ebenbürtig sind, beispielsweise einen hohen Ausziehwiderstand, eine ausgezeichnete Verdrehsicherheit und die darüber hinaus eine herabgesetzte Kerbwirkung zeigen, so dass die Ermüdungseigenschaften von Zusammenbauteilen, bestehend aus einem üblicherweise aus Blech bestehenden Bauteil und an diesem angebrachte Hohlkörperelemente, auch unter dynamischen Lasten verbessert werden.

Zur Lösung dieser Aufgabe wird verfahrensmäßig so vorgegangen, dass in jeder Arbeitsstation für jedes Profil jeweils zwei Bearbeitungen für jeden Hub des Folgeverbundwerkzeugs gleichzeitig durchgeführt werden.

Bei diesem Verfahren kann das verwendete Profil beispielsweise eine Form aufweisen, die bereits aus der WO 01/72449 oder aus der DE Gbm 202 05 192.7 bekannt ist, zum Beispiel ein Profil, das im Querschnitt zumindest im Wesentlichen rechteckig ist, mit auf der später dem Bauteil zugewandten Seite zwei voneinander einen Abstand aufweisenden, parallel zu den Längsseiten des Profils verlaufenden und im Querschnitt ebenfalls zumindest im Wesentlichen rechteckigen Balken, die durch eine im Vergleich zu den Balken breitere, im Querschnitt rechteckige Nut voneinander getrennt bzw. gebildet sind, die eine Tiefe aufweist, welche der Höhe der jeweiligen Balken zumindest im Wesentlichen entspricht. Die innere Seitenflächen der Balken des Profils können senkrecht zur Unterseite des Profils stehen oder die Balken können jeweils auf der inneren Seite eine schräg gestellte Flanke aufweisen, welche eine Hinterschneidung bildet. Ferner könnte ein Profil gewählt werden, bei dem die zwei Balken durch jeweilige Nuten begrenzt bzw. gebildet sind, die ebenfalls parallel zu den Längsseiten des Profils verlaufen, einen zumindest im Wesentlichen rechteckigen Querschnitt aufweisen sowie eine Tiefe haben, die der Höhe der jeweiligen Balken entspricht, wobei die eine Seite der Nut, die eine Innenflanke des jeweiligen Balkens bildet und auch die zweite Seite jeder Nut schräg gestellt sind, so dass ein schwalbenschwanzartiger Nutquerschnitt vorliegt. Auch kommen Ausbildungen in Frage, bei denen die Seitenflächen der Nuten senkrecht zur Unterseite des Profils stehen, d.h. keine Hinterschneidungen bilden.

Egal, welche konkrete Form für das Profil gewählt wird, führt die Herstellung in Arbeitsschritten, bei denen für jedes Profil immer zwei Bearbeitungen in einer Station durchgeführt werden, dazu, dass die Produktivität der Herstellungsanlage verdoppelt wird, ohne dass der Aufwand für die Herstellung des Folgeverbundwerkzeugs in einem Ausmaß steigt, das nicht mehr vertretbar wäre. Zwar wird durch die Verdopplung von Arbeitselementen ein gewisser Mehraufwand erforderlich, dieser lässt sich aber über entsprechende Fertigungszahlen ohne weiteres relativ früh amortisieren.

Es ist zwar möglich, in einem Folgeverbundwerkzeug mehrere Profile parallel zu bearbeiten, dies ist allerdings nicht unbedingt vorzuziehen, da bei auftretenden Problemen mit einem Profil bzw. mit der Bearbeitung eines Profils, das gesamte Folgeverbundwerkzeug bis zur Behebung der Störung angehalten werden muss, wodurch erhebliche Produktionseinbußen entstehen könnten. Nichtsdestotrotz lässt sich die vorliegende Erfindung auch auf ein Folgeverbundwerkzeug ausdehnen, das mehrere Profile gleichzeitig bearbeitet.

Besonders bevorzugte Ausführungen des erfindungsgemäßen Verfahrens, der erfindungsgemäßen Hohlkörperelemente sowie des erfindungsgemäßen Folgeverbundwerkzeugs lassen sich den weiteren Patentansprüchen entnehmen.

Besonders günstig bei dem erfindungsgemäßen Verfahren bzw. bei der erfindungsgemäßen Ausführung des Folgeverbundwerkzeugs ist, dass die Anzahl der Arbeitsstationen, in denen eine Zunahme der Länge des Profils durch die erfolgte Bearbeitung zu befürchten ist, auf zwei oder maximal drei beschränkt werden kann, nämlich die Schritte des Durchsetzvorgangs sowie des Lochvorgangs und des gegebenenfalls getrennt vorgesehenen Napfvorgangs, wobei der Napfvorgang sich mit dem Durchsetzvorgang und/oder mit dem Lochvorgang kombinieren lässt. Dadurch, dass eine ausgeprägte Längung des Profils während der Bearbeitung nicht mehr zu befürchten ist, führt dies zu einer Verbesserung der Zuverlässigkeit des Folgeverbundwerkzeugs sowie zu einer Vereinfachung desselben. Ferner kann das Folgeverbundwerkzeug erfindungsgemäß so ausgelegt werden, dass dem Profil gewisse Ausdehnungsmöglichkeiten in die Höhe bzw. in die Breite eingeräumt werden, die das Problem der Längung weiter herabsetzen, die Auslegung des Folgeverbundwerkzeug weiter vereinfachen und letztendlich auch keinerlei Nachteile bei den fertig gestellten Hohlkörperelementen mit sich bringen. Weitere Vorteile des erfindungsgemäßen Verfahrens, der erfindungsgemäßen Hohlkörperelemente sowie des erfindungsgemäß verwendeten Folgeverbundwerkzeug lassen sich den Figuren und der anschließenden Figurenbeschreibung entnehmen.

Die Figuren zeigen:
- Fig. 1: eine erste Ausführung eines Profils, das an sich aus der WO 01/72449 bekannt ist, das aber zum Zwecke der vorliegenden Erfindung in einem Folgeverbundwerkzeug entsprechend der Figur 2 verarbeitet wird, wobei die
- Fig. 2: eine in Bewegungsrichtung des Profils geschnittene Darstellung eines Folgeverbundwerkzeugs wiedergibt,
- Fig. 3: eine vergrößerte Darstellung des Folgeverbundwerkzeugs der Fig. 2 im Bereich der Arbeitsstationen,
- Fig. 4: eine Darstellung entsprechend der Fig. 2, jedoch eines alter- nativen Folgeverbundwerkzeugs,
- Fig. 5: eine vergrößerte Darstellung der Arbeitsstationen des Folgeverbundwerkzeugs der Fig. 4,
- Fig. 6A-F: verschiedene Schritte der Herstellung eines Hohlkörperelements aus dem Profil der Fig. 1 in einem erfindungsgemäßen Folgeverbundwerkzeug, wobei nur die wesentlichen Teile der einzelnen Arbeitsstationen gezeigt sind,
- Fig. 7A: ein alternatives Profil, das für sich aus der DE Gbm 20205192.7 bekannt ist,
- Fig. 7B-7D: Darstellungen eines erfindungsgemäßen Funktionselements, das erfindungsgemäß aus dem Profil der Fig. 7A hergestellt wird, die
- Fig. 8A-E: die einzelnen Herstellungsschritte für das Funktionselement der Fig. 7B-7D,
- Fig. 9: eine Darstellung der Arbeitsstationen eines Folgeverbund- werkzeugs, das zur Durchführung des Verfahrens gemäß Fig. 8A-8D verwendet wird,
- Fig. 10A-C: eine Matrize, die zur Anbringung des Funktionselements ge- mäß Fig. 7B-7D verwendet werden kann, wobei die Matrize der Matrize gemäß Fig. 6 des deutschen Gebrauchsmusters 20205192.7 sehr ähnlich ist,
- Fig. 11A-C: eine weitere Darstellung des erfindungsgemäßen Elements, das unter Anwendung des Profils gemäß Fig. 1 hergestellt wird,
- Fig. 12A-D: die einzelnen Herstellungsschritte zur Herstellung des Funkti- onselements gemäß Fig. 11A-C,
- Fig. 13A-E: eine Variante der Herstellung des Funktionselements gemäß Fig. 11A-C,
- Fig. 14A-E: ein weiteres alternatives Verfahren zur Herstellung des Funk- tionselements gemäß Fig. 11A-C,
- Fig. 15A-F: ebenfalls ein weiteres alternatives Verfahren zur Herstellung des Funktionselements gemäß Fig. 11A-C,
- Fig. 16: ein weiteres erfindungsgemäßes Profil,
- Fig. 17A-E: ein aus dem Profil gemäß Fig. 16 hergestelltes erfindungsge- mäßes Funktionselement,
- Fig. 18A-D: die einzelnen Schritte bei der Herstellung des Funktionsele- ments der Fig. 17A-C,
- Fig. 19A-E: eine Matrize zur Anbringung des Funktionselements gemäß Fig. 17A-C an ein Blechteil und entsprechen im Wesentlichen der Matrize gemäß Fig. 12A und 12B der DE Gbm 20205192.7,
- Fig. 20A-C: ein weiteres erfindungsgemäß herstellbares Funktionsele- ment, das der Ausführung gemäß Fig. 9A-E der WO 01/72499 entspricht,
- Fig. 21A-B: das Funktionselement gemäß Fig. 20A-20C an einem Blechteil befestigt,
- Fig. 22A-D: einen Profilstreifen unmittelbar vor und nach Abtrennung ei- nes einzelnen Hohlkörperelements mit Kerben an den Trenn- stellen zwischen den einzelnen Elementen,
- Fig. 23A-C: das Hohlkörperelement, das unter Anwendung des Streifens gemäß Fig. 22A-D hergestellt wird,
- Fig. 24A-D: eine Darstellung eines weiteren Profilstreifens unmittelbar vor und nach Abtrennung eines einzelnen Hohlkörperelements vom Profilstreifen, wobei Langlöcher an den Trennstellen zwi- schen benachbarten Hohlkörperelementen vorgesehen sind und
- Fig. 25A-C: das mit dem Profilstreifen gemäß Fig. 24A-D hergestellte Hohlkörperelement,
- Fig. 26A-E: verschiedene Darstellungen eines weiteren erfindungsgemä- ßen Hohlkörperelements, wobei Fig. 26A eine Ansicht von un- ten entsprechend dem Pfeil XXVIA der Fig. 26E, die Fig. 26B eine Seitenansicht des Elements gemäß Fig. 26A entspre- chend der Betrachtungsebene XXVIB-XXVIB, die Fig. 26C eine Schnittdarstellung entsprechend der Schnittebene XXVIC- XXVIC der Fig. 26A und die Fig. 26D und 26E zwei perspekti- vische Darstellungen einmal schräg von oben kommend (Fig. 26D) und einmal schräg von unten kommend (Fig. 26E) gese- hen, zeigen,
- Fig. 27A-B: zwei unterschiedliche, teilweise geschnittene Darstellungen eines Zusammenbauteils bestehend aus einem Hohlkörper- element entsprechend den Fig. 26A-26E und einem Blechteil, und zwar einmal von oben gesehen (Fig. 27A) und einmal von unten gesehen (Fig. 27B).

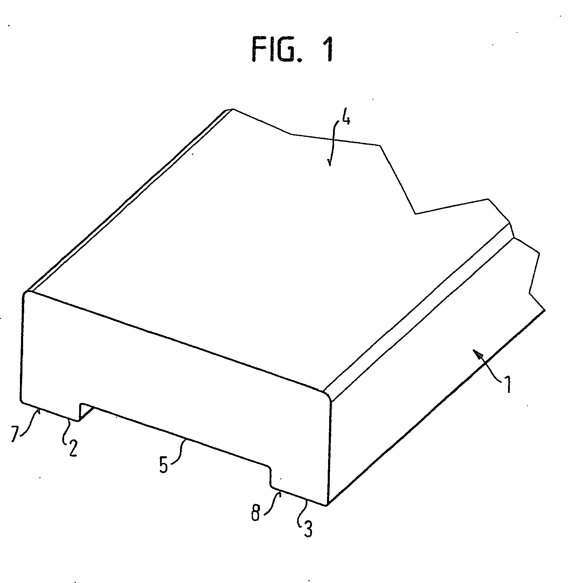

Fig. 1 zeigt einen Abschnitt eines länglichen Profils, das an sich aus der WO 01/72499 bekannt ist und das, wie auch die anderen Profile, die in dieser Anmeldung beschrieben sind und auch weitere vergleichbare Profile, die in einem Folgeverbundwerkzeug 10 bearbeitet werden, um Hohlelemente, beispielsweise Mutterelemente mit im Wesentlichen rechteckiger oder quadratischer Form, herzustellen. Wenn die Hohlelemente als Mutterelemente realisiert werden sollten, muss ein Gewinde in das Loch des Hohlkörperelements eingeschnitten bzw. hergestellt werden. Dies erfolgt üblicherweise außerhalb des Folgeverbundwerkzeugs in einer gesonderten Maschine. Ferner besteht die Möglichkeit, das Gewinde erst nach Anbringung des Hohlkörperelements an ein Blechteil herzustellen, beispielsweise mittels einer Gewinde formenden oder Gewinde schneidenden Schraube. Ferner ist es nicht notwendig, ein Gewinde im Hohlkörperelement vorzusehen, sondern die Lochung des Hohlkörperelements könnte als glatte Bohrung zur drehbaren Lagerung einer Welle oder als Steckaufnahme zur Aufnahme eines Steckstifts dienen.

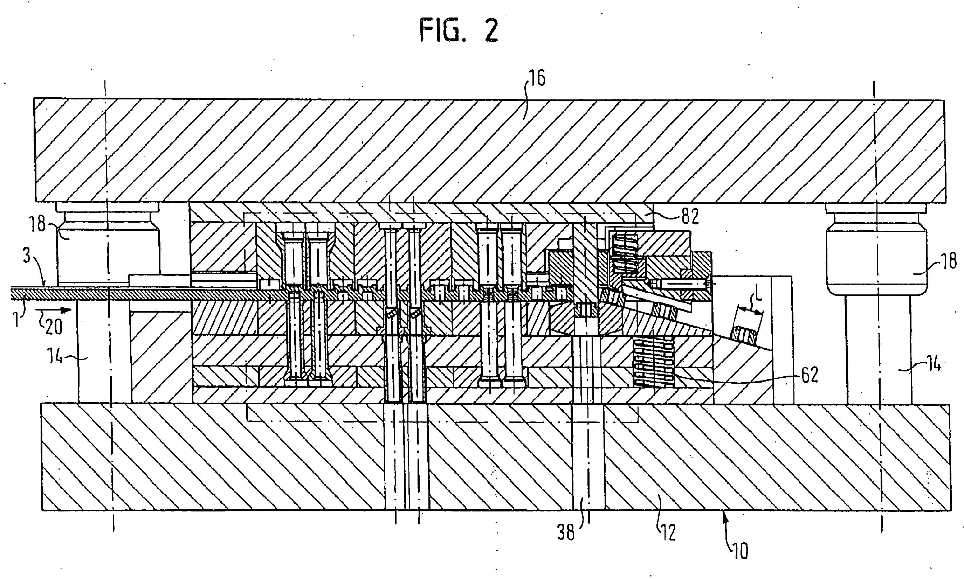

Ein erstes Folgeverbundwerkzeug, das zur Herstellung von Hohlkörperelementen aus dem Profil der Fig. 1 oder einem ähnlichen Profil dient, ist in Fig. 2 im Längsschnitt gezeigt, wobei der Längsschnitt durch die Mitte des Profils vorgenommen ist.

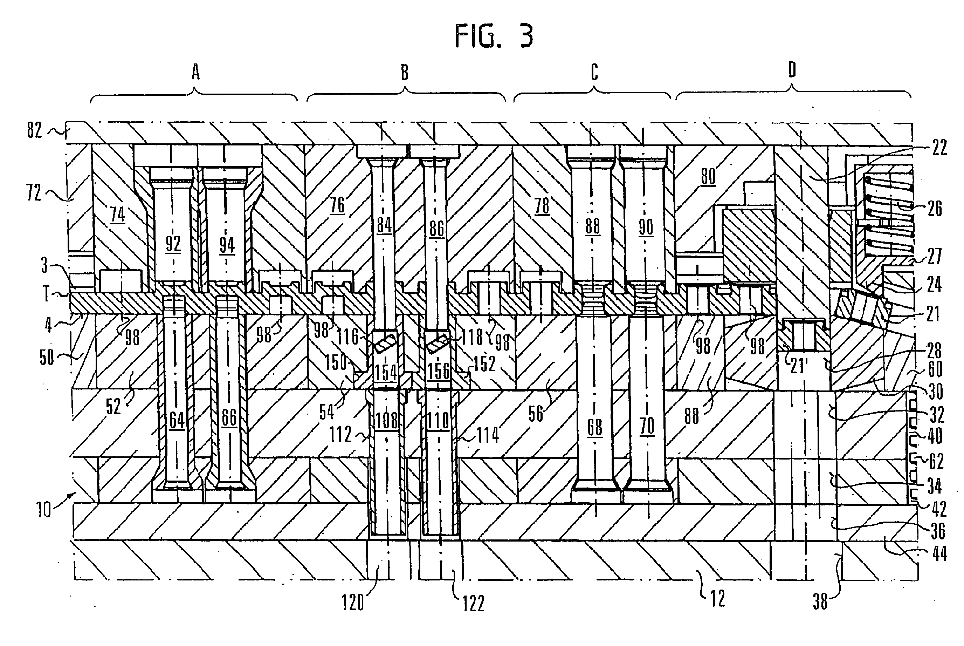

Man sieht aus Fig. 2 eine untere Platte 12, die üblicherweise an einem Pressentisch befestigt wird, entweder direkt oder indirekt über eine nicht gezeigte Zwischenplatte. Die untere Platte 12 trägt mehrere Säulen 14, vier in diesem Beispiel, von denen zwei ersichtlich sind, nämlich die zwei Säulen, die hinter der Schnittebene liegen. Oberhalb der Säulen befindet sich eine weitere Platte 16, die üblicherweise an der oberen Werkzeugplatte der Presse oder an einer Zwischenplatte der Presse befestigt ist. An der Platte 16 sind Führungen 18 angeschraubt (beispielsweise mittels Schrauben, die hier nicht dargestellt sind), wobei die Führungen 18 ausgelegt sind, um entsprechend der Hubbewegung der Presse auf und ab an den Säulen 14 zu gleiten. Das Profil 1 wird in Pfeilrichtung 20 bei jedem Hub der Presse vorgeschoben, und zwar um einen Betrag, der die doppelte Längsabmessung L der einzelnen aus dem Profil hergesellten Hohlkörperelemente beträgt. Man merkt, dass in der Darstellung gemäß Fig. 2 und 3 das Profil 1 mit den Balken 2, 3 nach oben gerichtet durch das Folgeverbundwerkzeug geführt wird. Wie aus der vergrößerten Darstellung des mittleren Bereichs des Folgeverbundwerkzeugs aus der Fig. 3 ersichtlich ist, umfasst das Folgeverbundwerkzeug in diesem Beispiel vier Arbeitsstationen A, B, C, D, in denen jeweils zwei Bearbeitungen bei jedem Hub der Presse gleichzeitig vorgenommen werden.

In der ersten Station A wird als erstes ein so genannter Durchsetzvorgang durchgeführt.

In der zweiten Arbeitsstation B wird ein Lochvorgang durchgeführt und in der dritten Arbeitsstation C ein Napfvorgang. Schließlich wird in der vierten Arbeitsstation D ein Abschlagstempel 22 verwendet, um zwei Hohlkörperelemente bei jedem Hub der Presse vom Profil 1 abzutrennen. Dabei schneidet die rechte Seite des Stempels das Profil an einer Trennstelle durch, die sich hinter dem ersten Hohlkörperelement, d.h. dem Hohlkörperelement 21 in Fig. 3 befindet sowie an einer Trennstelle hinter dem zweiten Hohlkörperelement 21'. Das Folgeverbundwerkzeug ist in den Fig. 2 und 3 in der geschlossenen Stellung gezeigt, in der die zwei Hohlkörperelemente 21 und 21' gerade vom Profil 1 abgetrennt wurden. Kurz vor dem Abschlagvorgang berührt die vordere Seite des Mutterelements 21 die Schrägfläche 24 der rechtwinkligen Nocke 27, die von einer Schraubendruckfeder 26 nach unten gedrückt wird. Der Vorschub des Profilstreifens drückt daher über die schräg gestellte Fläche der Nocke 27 diese nach oben, wodurch die Feder 26 komprimiert wird. Nach erfolgter Abtrennung des ersten Hohlkörperelements 21 drückt die Nocke 27 auf der rechten Seite des Mutterelements 21 und kippt dieses in die geneigte Stellung, die auf der rechten Seite der Fig. 3 ersichtlich ist. Das Mutterelement 21 fällt dann auf eine Rutsche aus dem Arbeitsbereich des Folgeverbundwerkzeugs und kann beispielsweise in der Position gemäß Fig. 2 dann seitlich aus dem Folgeverbundwerkzeug herausgeführt werden, beispielsweise über seine seitliche Rutsche unter der Einwirkung von Schwerkraft oder mit einem Druckluftstoß usw.

Das zweite Hohlkörperelement 21' fällt durch ein Loch 28 in der Abschlagmatrize 30 und anschließend durch entsprechende Bohrungen 32, 34, 36 und 38 hindurch, die in Platten 40, 42, 44 und 12 ausgebildet sind.

Die Bohrungen bzw. das Loch 38 in der Platte 12 kann mit einer weiteren Bohrung (nicht gezeigt) im Pressentisch oder in einer etwaig vorgesehenen Zwischenplatte zwischen der Platte 12 und dem Pressentisch führen, die die Herausführung der Mutterelemente wie 21' ermöglicht, beispielsweise unter der Einwirkung der Schwerkraft oder über eine seitliche Rutsche oder unter Anwendung eines Druckluftstoßes.

Bei der konkreten in Fig. 3 gezeigten Konstruktion ist die Platte 44 über nicht dargestellte Schrauben mit der Platte 12 verschraubt. Die Platte 42 besteht aus mehreren Plattenabschnitten, die den jeweiligen Arbeitsstationen zugeordnet sind, die über weitere, nicht dargestellte Schrauben (da außerhalb der Ebene der Schnittdarstellung angeordnet) mit der durchgehenden Platte 44 verschraubt sind. Die durchgehende Platte 40 ist ebenfalls mit den Abschnitten der Platte 42 verschraubt, und zwar auch hier mittels nicht dargestellter Schrauben. Oberhalb der durchgehenden Platte 40 befinden sich wiederum Plattenabschnitte 50, 52, 54, 56, 58 und 60, die wiederum mit der Platte 40 verschraubt sind. Die Platte 50 ist eine Abstützplatte, die eine untere Führung für das Profil 1 bildet, genauer gesagt für die Oberseite 4 des Profils 1, die in dieser Darstellung die Unterseite bildet. Die Plattenabschnitte 52, 54 und 56 sind den Arbeitsstationen A, B und C zugeordnet, während die Plattenabschnitte 58 und 60, die eine Aufnahme für die Abschlagmatrize 30 bilden, der Arbeitsstation D zugeordnet sind.

An mehreren Stellen zwischen der durchgehenden Platte 44 und den Plattenabschnitten 50, 52, 54, 56, 58 und 60 befinden sich kräftige Schraubendruckfedern 62, von denen nur die eine Feder in den Fig. 2 und 3 zu sehen ist, da die anderen außerhalb der Schnittebene angeordnet sind. Diese Federn, wie 62, haben die Funktion, beim Öffnen der Presse die Plattenabschnitte 50 bis 60 anzuheben, wodurch auch der Profilstreifen 1 angehoben wird und hierdurch aus dem Arbeitsbereich der Durchsetzstempel 64, 66 und aus dem Arbeitsbereich der Napfstempel 68 und 70 gelangt, wodurch das Profil um den doppelten Betrag der Länge der Hohlkörperelemente 21 weiter vorgeschoben werden kann.

Die Trennebene des Folgeverbundwerkzeugs 10 befindet sich oberhalb des Profils 1 und ist mit T in Fig. 3 bezeichnet.

Oberhalb des Profilstreifens befinden sich wiederum Plattenabschnitte 72, 74, 76, 78 und 80, die mit einer durchgehenden Platte 82 verschraubt sind - auch hier über nicht dargestellte Schrauben. Ferner ist die Platte 82 mit der oberen Platte 16 verschraubt.

Bei Öffnung der Presse werden somit die Platten 72, 74, 76, 78 und 80 mit der Platte 22 und der oberen Platte 16 angehoben, und zwar so weit, dass die zwei Lochstempel 84, 86 und die zwei oberen Napfstempel 88 und 90, wie auch die Matrizen 92 und 94, die mit den Durchsetzstempel 64, 66 zusammenarbeiten und auch der Abschlagstempel 22 außer Eingriff mit dem Profilstreifen 1 gelangen. Durch diese Bewegung, gekoppelt mit der Anhebung des Profilstreifens durch die Feder 62, wird es ermöglicht, dass der Profilstreifen 1 um die doppelte Längenabmessung der Hohlkörperelemente 21 weiter geschoben werden kann in Vorbereitung für den nächsten Hub der Presse.

Man sieht, dass die Arbeitsstationen A und B eine Längenabmessung, d.h. in Bewegungsrichtung 20 des Profilstreifens 1, aufweisen, die der vierfachen Längenabmessung eines Hohlkörperelements 21 entspricht. Die Arbeitsstation C hat eine Längenabmessung, die der dreifachen Längenabmessung eines Hohlkörperelementes 21 entspricht, während die Arbeitsstation D eine Längenabmessung aufweist, die ein mehrfaches der Längenabmessung des Hohlkörperelements 21, in diesem Beispiel das sechsfache, aufweist. Dies bedeutet, dass so genannte leere Stellen wie 98 vorhanden sind, an denen keine Bearbeitung des Profilstreifens 1 stattfindet. Diese leeren Stellen schaffen aber Platz, der notwendig ist, um die einzelnen Bestandteile der verwendeten Werkzeuge ausreichend stabil auszubilden und abzustützen.

Ferner sieht man aus Fig. 3, dass die Lochmatrizen 100, 102, die mit den Lochstempeln 84, 86 zusammen arbeiten, eine mittlere Bohrung 104 bzw. 106 aufweisen, die mit weiteren Bohrungen 108, 110 in Einsatzhülsen 112, 114 ausgerichtete sind, die es ermöglichen, die Stanzbutzen 116, 118 zu entsorgen. Diese fallen nämlich durch die Bohrung 108, 114, die im Durchmesser größer sind als die Bohrung 104, 106 und durch die weiteren Bohrungen 120, 122 in der Platte 12 nach unten und können über entsprechende Passagen im Pressentisch oder in einer etwaig vorgesehenen Zwischenplatte in der gleichen Art und Weise wie die Mutterelemente 21' entsorgt bzw. abgeführt werden.

Obwohl hier nicht gezeigt, befinden sich links und rechts des Profilstreifens 1, d.h. hinter der Ebene der Zeichnung und vor der Ebene der Zeichnung der Fig. 3, Führungselemente, die beispielsweise durch Wangen der Platten 50, 52, 54, 56 und 58 gebildet sein können, die dafür sorgen, dass der Profilstreifen der gewünschten Bewegungsbahn durch das Folgeverbundwerkzeug folgt. Es kann ein geringfügiger seitlicher Freiraum vorgesehen werden, der eine etwaige Ausdehnung des Profilstreifens in Querrichtung zulässt.

Die konstruktiven Einzelheiten der Durchsetzstempel 64, 66 der damit zusammen arbeitenden Matrizen 92, 96, der Lochstempel 84, 86 der damit zusammen wirkenden Matrizen 100, 102 und der Napfstempel 88, 90 bzw. 68, 70 gehen aus den Zeichnungen der Fig. 2 und 3 hervor und werden im Übrigen genauer in den nachfolgenden Zeichnungen näher erläutert.

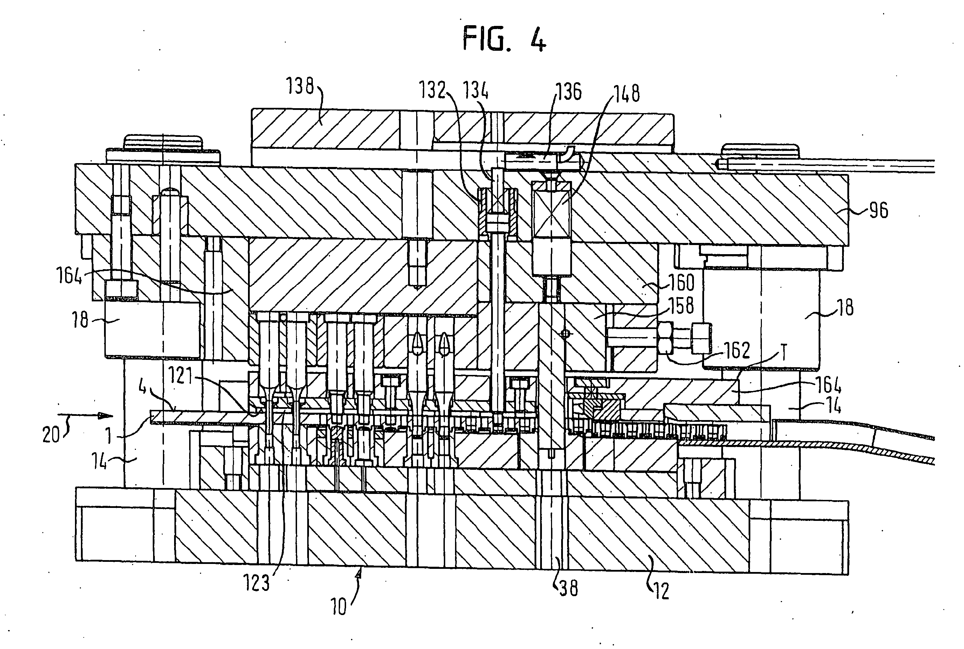

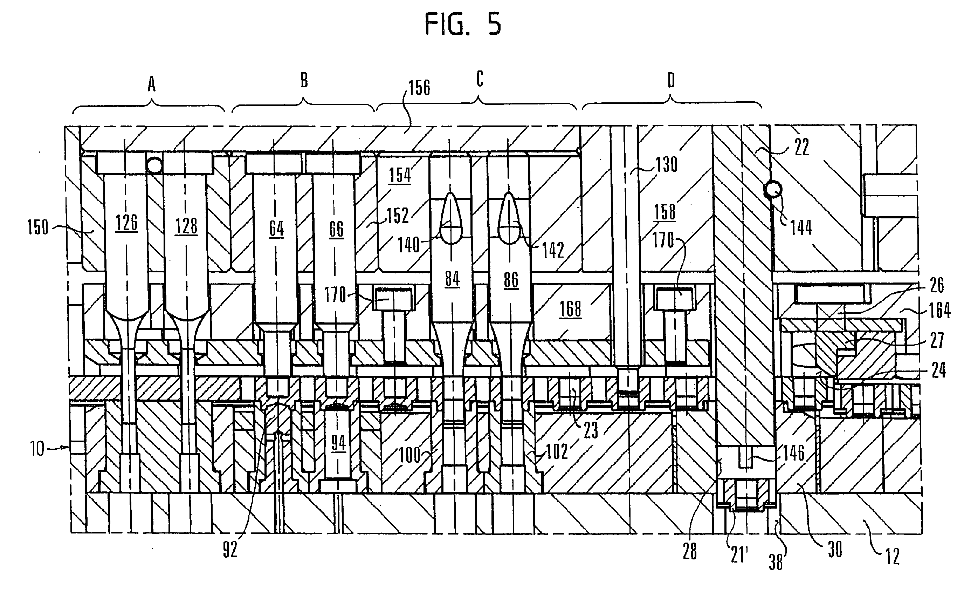

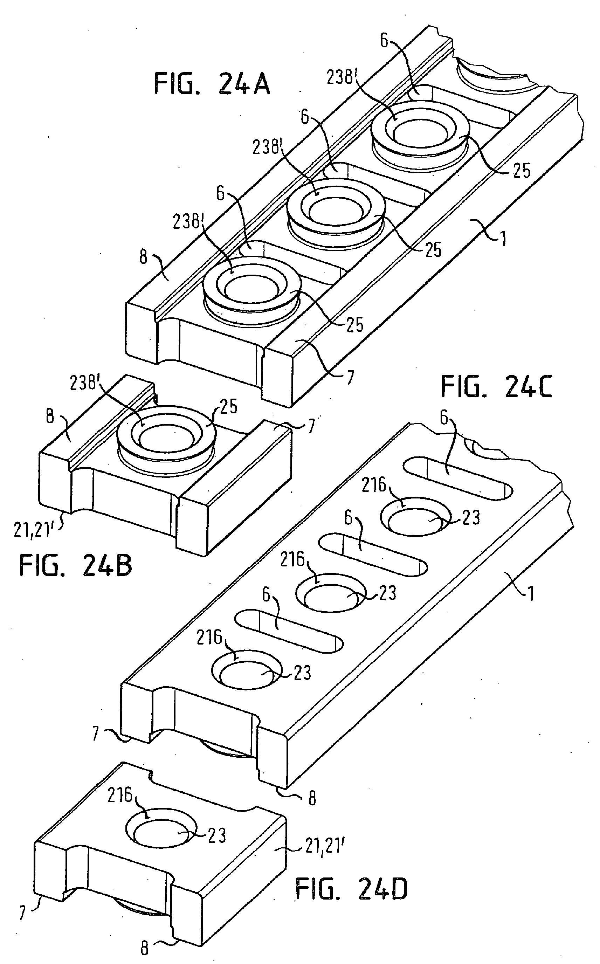

Die Fig. 4 und 5 zeigen eine alternative Ausführung eines Folgeverbundwerkzeugs 10, das ausgelegt ist, um einen Profilstreifen zu erzeugen, der in der Fig. 24A bzw. 24C gezeigt ist.

Da die Auslegung des Folgeverbundwerkzeugs 10 der Fig. 4 und 5 der Auslegung des Folgeverbundwerkzeugs gemäß Fig. 3 ähnlich ist, werden gleiche Teile bzw. Teile, die die gleiche Funktion aufweisen, mit den gleichen Bezugszeichen versehen und es versteht sich, dass die Beschreibung des Folgeverbundwerkzeugs gemäß Fig. 2 und 3 entsprechend für die entsprechend gekennzeichneten Bestandteile der Ausführung gemäß Fig. 4 und 5 gilt. Es werden im Folgenden nur die Unterschiede erläutert.

Auffallend ist zunächst, dass der Profilstreifen 1 in der Ausführung gemäß Fig. 4 in der Lage geführt wird, die in Fig. 1 gezeigt ist, d.h. mit den Balken 2, 3 nach unten. Ferner werden bei dieser Ausführungsform alle Stempel oberhalb des Profilstreifens 1 angeordnet, während die entsprechenden Matrizen unterhalb des Profilstreifens sich befinden. Die Trennebene T befindet sich in diesem Beispiel an der gezeigten Stelle. Der Profilstreifen 1 muss bei dieser Ausführungsform angehoben werden, was durch gefederte Einrichtungen (nicht gezeigt) bewerkstelligt wird, und zwar wird der Profilstreifen hier durch die gefederten Einrichtungen soweit angehoben, bis die Oberseite 4 in Berührung mit der Decke 120 eines Führungskanals 122 gelangt. An dieser Stelle kann der Profilstreifen 1 in Vorschubrichtung 20 bei jedem Hub der Presse vorgeschoben werden. Die Decke 120 liegt zwischen zwei Seitenwangen des Führungskanals 122, die die seitliche Führung des Profilstreifens bilden.

Bei dieser Ausführung ist die erste Arbeitsstation A mit zwei Freischnittstempeln 126, 128 versehen, deren untere Enden im Querschnitt die gleiche Form haben, wie die Langlöcher 6 des Profilstreifens 1 der Fig. 24A bzw. 24C. Das Bezugszeichen 130 deutet auf einen Stift, der sich in Anlage mit Abflachungen der Freischnittstempel 126 bzw. 128 befindet, die eine Verdrehsicherung bilden und somit die Orientierung der Freischnittstempel 126 und 128 sichern. In der Arbeitsstation B befinden sich die zwei Durchsetzstempel 64 und 66, die mit entsprechenden Matrizen 92 und 94 innerhalb des Profilstreifens arbeiten. Die Arbeitsstation C umfasst die zwei Lochstempel 84 und 86, die mit entsprechenden Lochstempelmatrizen 100, 102 zusammen arbeiten.

In diesem Beispiel befindet sich in einer vierten Arbeitsstation ein Lagekontrollstift 130, der bei jedem Hub der Presse in eine Bohrung bzw. in ein Loch im Profilstreifen eingreifen muss. Gelingt dies nicht, so weiß man, dass der Profilstreifen nicht richtig ausgerichtet ist. Die Ermittlung, ob die Lage richtig ist oder nicht, erfolgt über diesen Stift 130, der von einer Feder 132 nach unten gedrückt wird. Wird der Lagekontrollstift 130 nach oben verschoben, da sein Stirnende an den Profilstreifen anstößt, anstatt in das Loch einzugreifen, wird der innerhalb der Schraubendruckfeder 132 geführte Stift 134 nach oben geschoben, wo er von einem Näherungssensor 136 erfasst wird, der dann ein Abschaltsignal für die Pressenanlage erzeugt, da bei Fehlausrichtung des Profilstreifens 1 ein Fehler vorliegt und die Presse nicht betrieben werden darf. Erst nach Behebung der Fehlerquelle kann die Presse wieder in Betrieb genommen werden. Die Platte mit dem Bezugszeichen 138 wird einerseits mit der Platte 16 und andererseits mit dem oberen Werkzeug der Presse bzw. einer Zwischenplatte der Presse verschraubt. Die Platte 138 überträgt somit die Presskräfte auf die einzelnen Werkzeuge des Folgeverbundwerkzeugs.

Die Bezugszeichen 140, 142 zeigen zwei Mitnehmstifte, die dafür sorgen, dass die Lochstempel 84, 86 mit der oberen Platte angehoben werden. Die gleiche Funktion erfüllt der Stift 144 in Bezug auf den Abschlagstempel 22. Der Abschlagstempel 22 hat in dieser Ausführungsform zwei Stifte 146 an seinem unteren Ende, die mittels der Schraubendruckfeder 148 nach unten vorgespannt sind. Diese Stifte stellen sicher, dass das Mutterelement 21' aus der Bohrung 38 der Matrize 30 in die Bohrung 38 der Platte 12 hinein gedrückt wird.

Die Platten, die die oberen Enden der Freischnittstempel 126, 128, den Durchsetzstempel 64, 66 und den Lochstempel 84, 86 tragen, sind mit der Platte 156 verschraubt, die wiederum mit der Platte 16 verschraubt ist. Das Bezugszeichen 158 bezeichnet eine Führungsplatte für den Lagekontrollstift 130 und den Abschlagstempel 22 und ist justierbar an der oben liegenden Platte 160 verschraubt, diese wiederum ist mit der Platte 16 verschraubt. Das Bezugszeichen 162 bezeichnet die Einstelleinrichtung (Schraube mit Schraubblock und Kontermutter). Das Bezugszeichen 164 bezeichnet eine Platte, die mit der Oberseite des Führungskanals 122 verschraubt ist (siehe beispielsweise die Schrauben 170) und die verschiedene Ausnehmungen aufweist für die Freischnittstempel 126, 128, für die Durchsetzstempel 64, 66, für die Lochstempel 84, 86, für den Abschlagstempel 22 sowie für den Kontrollstift 130.

Mittels der Folgeverbundwerkzeuge der Fig. 2, 3 bzw. 4, 5 wird ein Verfahren zum Herstellen von Hohlkörperelementen, wie Mutterelemente, zur Anbringung an üblicherweise aus Blech bestehenden Bauteilen realisiert. Das Verfahren dient der Herstellung von Hohlkörperelementen 21, 21' mit einem zumindest im Wesentlichen quadratischen oder rechteckigen Außenumriss durch Ablängung einzelner Elemente von einem in Form einer Profilstange oder eines Wickels vorliegenden Profil 1 nach vorheriger Stanzung von Löchern 23 in das Profil 1, gegebenenfalls mit anschließender Ausbildung eines Gewindezylinders unter Anwendung eines Folgeverbundwerkzeugs mit mehreren Arbeitsstationen A, B, C, D, in denen jeweilige Bearbeitungen durchgeführt werden. Das Verfahren zeichnet sich dadurch aus, dass in jeder Arbeitsstation A, B, C, D für das Profil 1 bzw. für mehrere nebeneinander angeordnete Profile jeweils zwei Bearbeitungen für jeden Hub des Folgeverbundwerkzeugs gleichzeitig durchgeführt werden. D.h., es ist grundsätzlich möglich, mehrere Profile 1 nebeneinander und zeitgleich im gleichen Folgeverbundwerkzeug zu bearbeiten, vorausgesetzt, die entsprechende Anzahl von einzelnen Werkzeugen, wie Durchsetzstempel, Lochstempel und die zugeordneten Matrizen, ist vorhanden.

In der letzten Arbeitsstation werden mittels eines Abschlagstempels 22 für jeden Hub der Presse von dem bzw. von jedem Profil 1 jeweils zwei Hohlkörperelemente 21, 21' abgetrennt.

Der Abschlagstempel 22 durchtrennt das Profil an einer ersten Stelle hinter einem ersten Hohlkörperelement 21 und an einer zweiten Stelle hinter einem zweiten Hohlkörperelement 21', wobei das zweite Hohlkörperelement 21' in Richtung der Bewegung des Abschlagstempels quer zur Längsrichtung des Profils 1 aus der Bewegungsbahn des Profils herausgeführt wird. Das erste Hohlkörperelement 21 wird in der Abschlagstation des Folgeverbundwerkzeugs zumindest vorerst im Allgemeinen in Richtung der Bewegungsbahn des Profils herausgeführt.

Jede Arbeitsstation des Folgeverbundwerkzeugs weist eine Länge in Laufrichtung des Profils auf, die dem Dreifachen oder dem Vierfachen oder dem Mehrfachen der Längsabmessung eines fertigen Hohlkörperelements 21, 21' entspricht.

Bei der Ausführung gemäß Fig. 2, 3 wird in der ersten Arbeitsstation A ein Durchsetzvorgang, in der zweiten Arbeitsstation B ein Lochvorgang, in der dritten Arbeitsstation C ein Napfvorgang und in der vierten Arbeitsstation D die Vereinzelung von jeweils zwei Hohlkörperelementen 21, 21' von dem bzw. von jedem Profil 1 mittels des Abschlagstempels 22 durchgeführt.

Bei der Ausführung gemäß Fig. 4, 5 wird in der ersten Arbeitsstation A ein Freischnittvorgang, in der zweiten Arbeitsstation B ein Durchsetzvorgang, in der dritten Arbeitsstation C ein Lochvorgang und in der vierten Arbeitsstation D die Vereinzelung von jeweils zwei Hohlkörperelementen von jedem Profil mittels des Abschlagstempels 22 durchgeführt.

Die Ausführung ist vorzugsweise so, dass in der vierten Arbeitsstation D auch eine Lagekontrolle mittels des Lagekontrollstifts 130 durchgeführt wird.

Bei dem Folgeverbundwerkzeug der Fig. 2, 3 kann der Napfvorgang mit dem Durchsetzvorgang kombiniert werden, wodurch die dritte Arbeitsstation C eingespart wird.

Auch bei dem Folgeverbundwerkzeug gemäß den Fig. 4, 5 wird der Napfvorgang mit dem Durchsetzvorgang kombiniert, wodurch eine Arbeitsstation eingespart wird.

Bei beiden Ausführungsformen des Folgeverbundwerkzeugs wird eine gefederte Nocke 27 mit einer zur Bewegungsbahn des Profils schräggestellten Nockenfläche 24 von der vorderen Kante des vorderen Endes des Profils am Ausgangsende der letzten Arbeitsstation entgegen der Kraft einer Federeinrichtung 26 vorgespannt. Nach Abtrennung des am vorderen Ende des Profils ausgebildeten Hohlkörperelements 21 wird dieses von der gefederten Nocke nach unten gekippt, um die Entfernung aus dem Folgeverbundwerkzeug zu erleichtern.

Bei der Ausführung gemäß Fig. 2 und 3 arbeiten die Stempel 64, 66 zur Durchführung des Durchsetzvorgangs und die Lochstempel 84, 86 zur Durchführung des Lochvorgangs von entgegengesetzten Seiten des Profils 1 auf diesem. Bei der Durchführung des Napfvorgangs wird mittels jeweiliger Napfstempel 68, 70, 88, 90 von beiden Seiten des Profilstreifens 1 genapft.

Bei der Ausführung gemäß Fig. 4 und 5 arbeiten die Stempel 64, 66 zur Durchführung des Durchsetzvorgangs und die Lochstempel 84, 86 zur Durchführung des Lochvorgangs von der gleichen Seite des Profils 1 auf diesem.

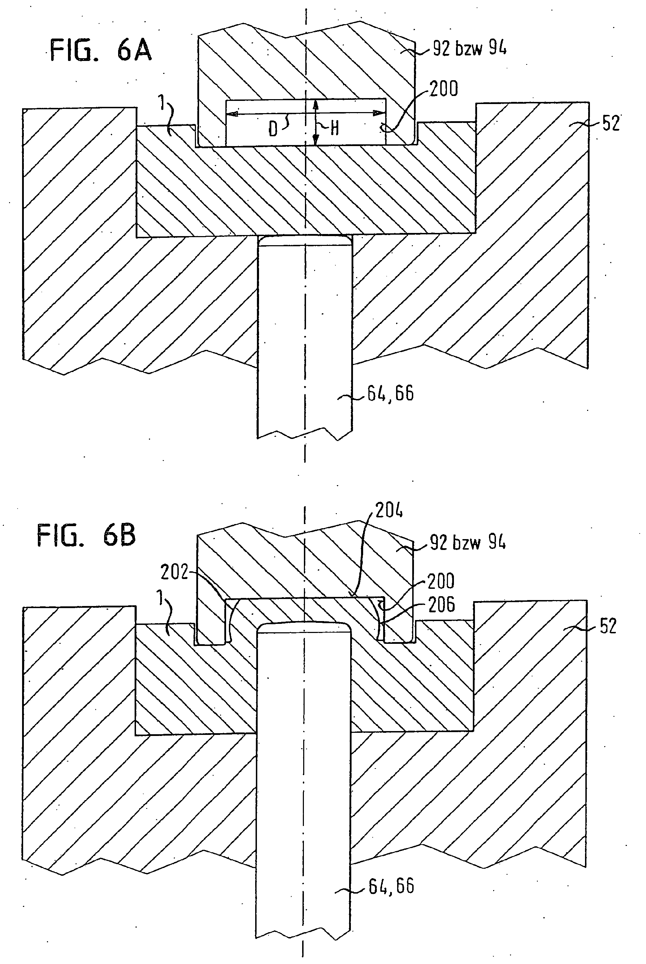

Es werden nun einige Beispiele angegeben, die die Herstellung von bestimmten Hohlkörperelementen beschreiben. Bei dem Beispiel der Fig. 6A bis 6F werden aus einem Profil entsprechend der Fig. 1 Hohlkörperelemente 21 hergestellt, die eine Form ähnlich der Fig. 4 der WO 01/72449 und eine Querschnittsform insbesondere gemäß Fig. 6A aufweist.

Bei der Durchführung des Durchsetzvorgangs (Fig. 6A, 6B) wird das Profil 1 auf der dem Durchsetzstempel 64 bzw. 66 abgewandten Seite des Profils von einer Matrize 92 bzw. 94 mit einer zylindrischen Ausnehmung 200 abgestützt, die, wie Fig. 6B zeigt, einen Innendurchmesser D aufweist, der größer ist als die durch den Durchsetzvorgang ausgebildete Erhebung 202 im Profil 1, wobei die axiale Tiefe H der Vertiefung so bemessen ist, dass die durch den Durchsetzvorgang erzeugte Erhebung 202 an ihrer Stirnseite 204 flach ist, jedoch an ihrer Außenseite 206 eine ballige Form annimmt.

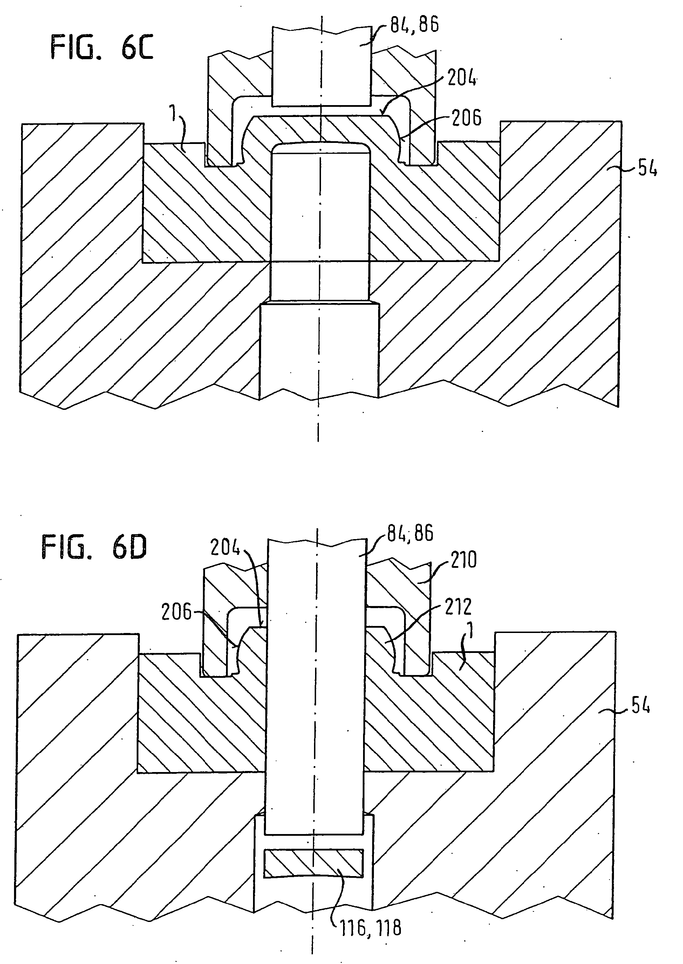

Beim Lochvorgang, der in Fig. 6C, 6D gezeigt ist, gelangt ein Lochstempel 84, 86 zur Anwendung, der zumindest im Wesentlichen den gleichen Durchmesser wie der Durchsetzstempel 64, 66 aufweist.

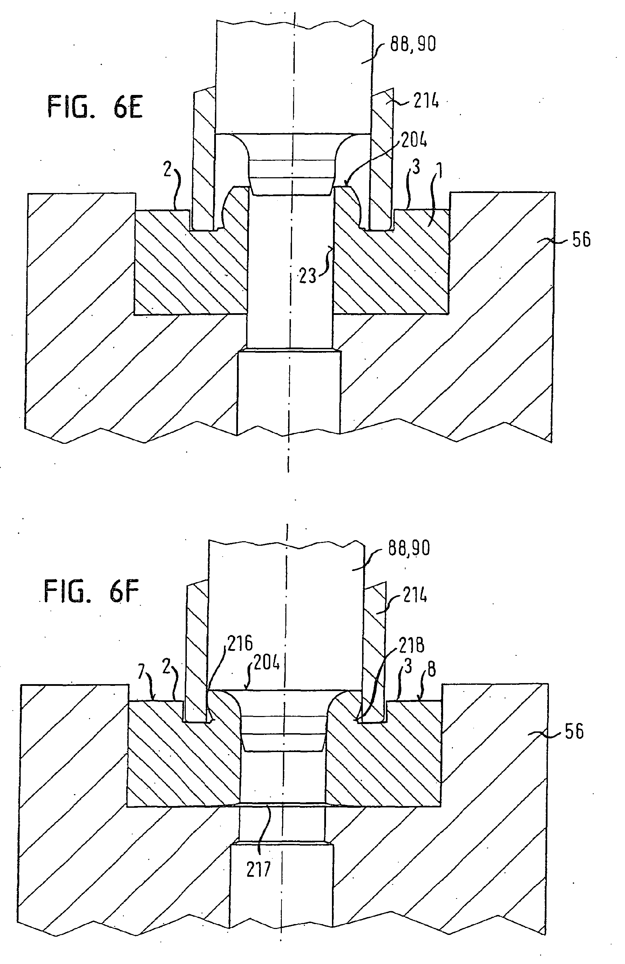

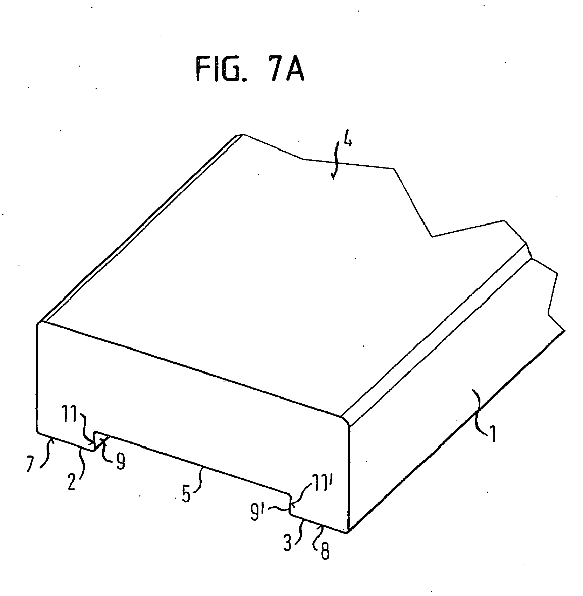

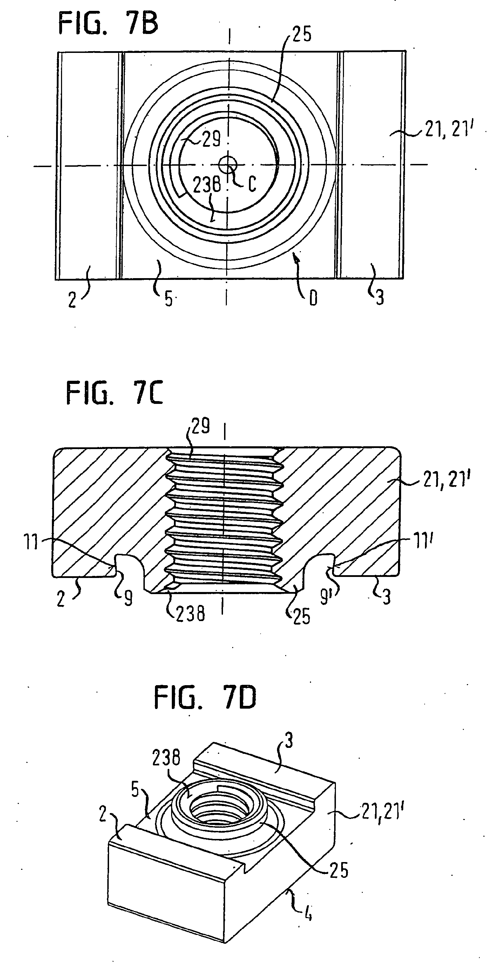

Nach Heraustrennen des Stanzbutzens 116, 118 wird in der Station C entsprechend den Fig. 6E, 6F ein Napfvorgang durchgeführt, wobei der Napfstempel 88 bzw. 90, der auf die Stirnseite der durch den Durchsetzvorgang erzeugten Erhebung einwirkt, innerhalb eines Zylinders 214 geführt, der die radiale Ausdehnung der Erhebung begrenzt und zu einer zumindest in etwa scharfen Außenkante 216 der Erhebung 206 an deren Stirnseite 204 führt, die in eine Hinterschneidung 218 übergeht. Man merkt, dass die Stirnseite 204 oberhalb der Oberseiten 7, 8 der Balken 2, 3 angeordnet ist, d.h. über die Balken hinausragt, was für die selbststanzende Funktion des Hohlkörperelements erforderlich ist. Ein zweiter Napfstempel wie 68 bzw. 70 in Fig. 3 kann zur Ausbildung der Ringfase 216 gegebenenfalls verwendet werden (zweiter Napfstempel hier nicht gezeigt). Anstelle des Profils 1 nach Fig. 1 kann ein Profil 1 gemäß Fig. 7A verwendet werden. Das Profil 1 ist im Querschnitt zumindest im Wesentlichen rechteckig, mit auf der später dem Bauteil zugewandten Seite zwei voneinander einen Abstand aufweisenden, parallel zu den Längsseiten des Profils verlaufenden und im Querschnitt ebenfalls zumindest im Wesentlichen rechteckigen Balken 2, 3, die durch eine im Vergleich zu den Balken breitere, im Querschnitt rechteckige Nut 5 voneinander getrennt bzw. gebildet sind, die eine Tiefe aufweist, welche der Höhe der jeweiligen Balken 2, 3 zumindest im Wesentlichen entspricht.

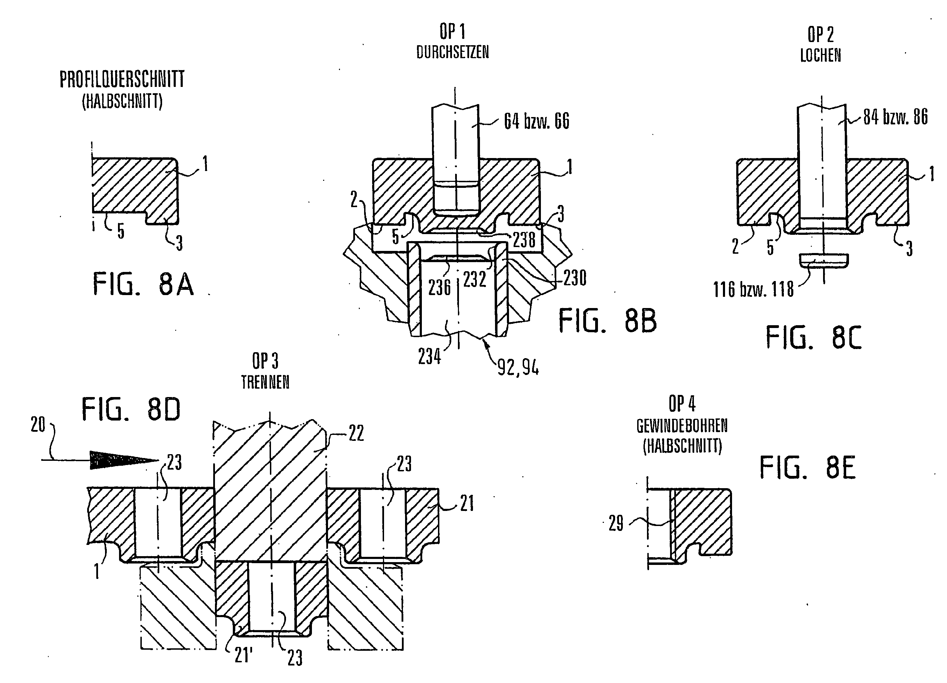

Die Balken weisen jeweils auf der inneren Seite eine schräg gestellte Flanke 9, 9' auf, welche eine Hinterschneidung 11 bzw. 11' bildet. Das Hohlkörperelement gestaltet sich dann wie in Fig. 7B bis 7D gezeigt. Man sieht aus Fig. 7C, dass hier keine Ringfase 216 am Gewindeauslauf vorgesehen ist, und zwar deshalb nicht, weil bei dem Herstellungsverfahren, das in Fig. 8A bis 8E dargestellt ist, kein Napfstempel verwendet wird.

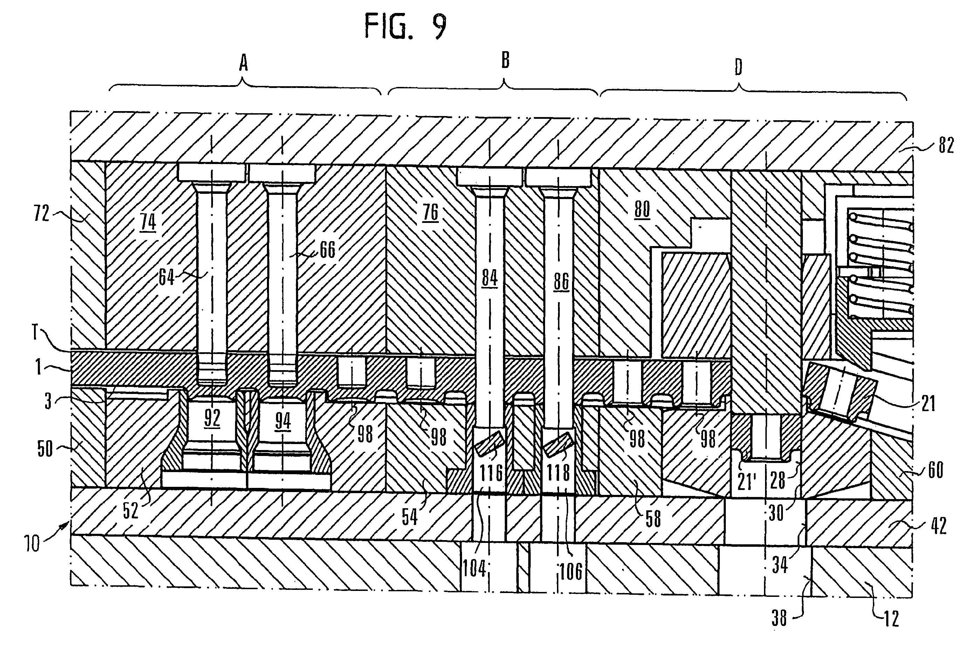

Die Ringfase 218 am Gewindeeinlauf wird durch die Matrize 92 bzw. 94 erzeugt, die für den Durchsetzvorgang verwendet wird, der hier dem Durchsetzvorgang gemäß den Fig. 4, 5 entspricht. Die Formgebung der Matrize 92 bzw. 94 und die Bedeutung der Herstellungsschritte in drei Arbeitsstationen (einschließlich des Trennvorgangs gemäß Fig. 8D) gehen aus den Fig. 8A bis 8E hervor und die Arbeitsstationen des entsprechenden Folgeverbundwerkzeugs 10 sind in Fig. 9 dargestellt. Die Bezugszeichen in Fig. 9 entsprechen weitestgehend denen der Fig. 2, 3 und die Beschreibung der Fig. 2, 3 gilt dementsprechend auch für die Fig. 9. Man merkt außerdem, dass bei dieser Ausführung der Ringvorsprung des fertig gestellten Elements, d.h. der Pilotteil bzw. Stanzabschnitt 25 weist keine Hinterschneidung auf. Diese ist nicht erforderlich, da die Balken hinterschnitten sind.

Man merkt ferner, dass ein Durchsetzstempel 64 bzw. 66 verwendet wird, mit einem Durchmesser, der zumindest im Wesentlichen dem Kemdurchmesser eines später im fertigen Hohlkörperelement auszubildenden Gewindes 27 entspricht, und dass bei der Durchführung des Durchsetzvorgangs das Profil auf einer Matrize abgestützt 92, 94 wird mit einem rohrförmigen Vorsprung 230 mit einer gerundeten Innenkante 232 an deren Stirnseite und innerhalb des ringförmigen Vorsprungs mit einem Bolzen 234 mit einer mittleren Erhebung 236 vorsehen ist, die bemessen ist, um in der freien Stirnseite der durch den Durchsetzvorgang erzeugten Erhebung eine konusförmige Vertiefung 238 auszubilden, die später als Einführkonus 238' für ein im Hohlkörperelemente ausgebildetes Gewinde 27 eingeführtes Bolzenelement dient.

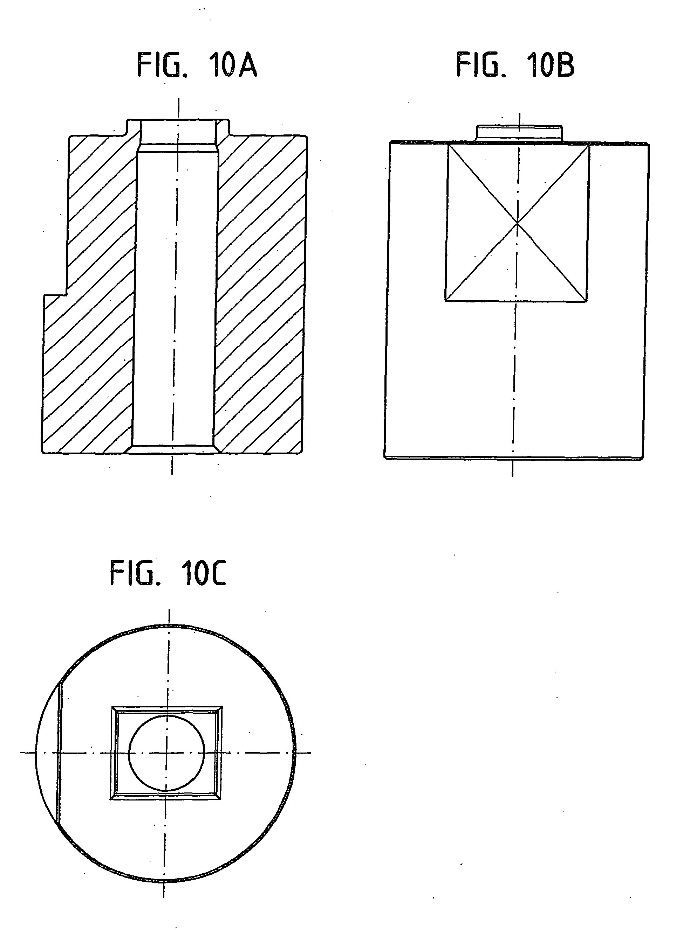

Der Lochvorgang wird mit einem Lochstempel 84 bzw. 86 durchgeführt, der zumindest im Wesentlichen den gleichen Durchmesser wie der Durchsetzstempel 64 bzw. 66 aufweist. Zur Anbringung des fertiggestellten Hohlelements an ein Blechteil kann eine Matrize entsprechend den Fig. 10A bis 10C verwendet werden. Dieser Vorgang ist bereits in der DE-Gbm 202 05 192.7 beschrieben und diese Beschreibung gilt auch hier.

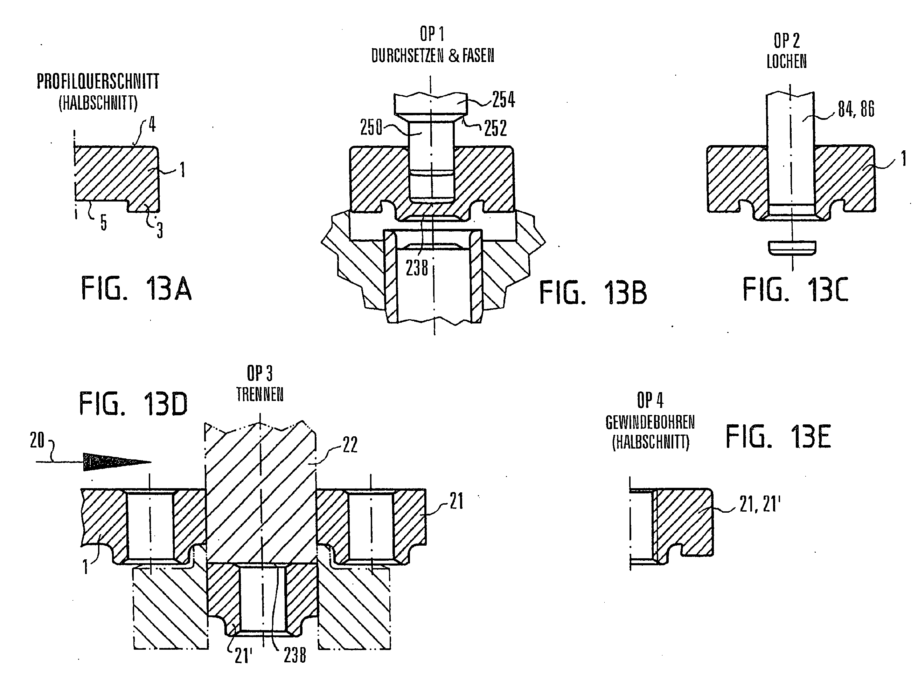

Es kann hier als Durchsetzstempel ein abgesetzter Stempel entsprechend der Fig. 13B benutzt werden, mit einem vorderen zylindrisch ausgeführten Teil 250, der über eine konusförmige Ringschulter 252 in einen hinteren Abschnitt 254 größeren Durchmessers übergeht, wobei die konusförmige Ringschulter 254 im fertigen Hohlkörperelement im Gewindeauslaufbereich eine Ringfase bildet (256 in Fig. 13D)

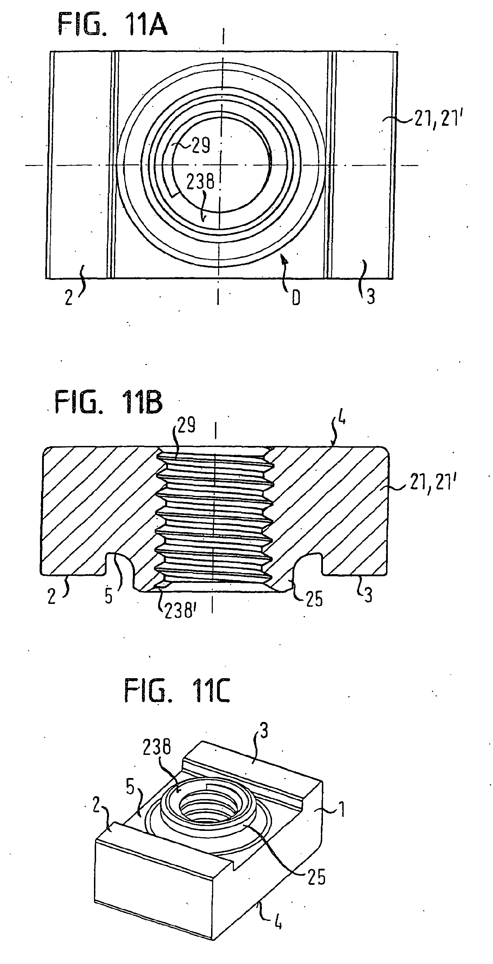

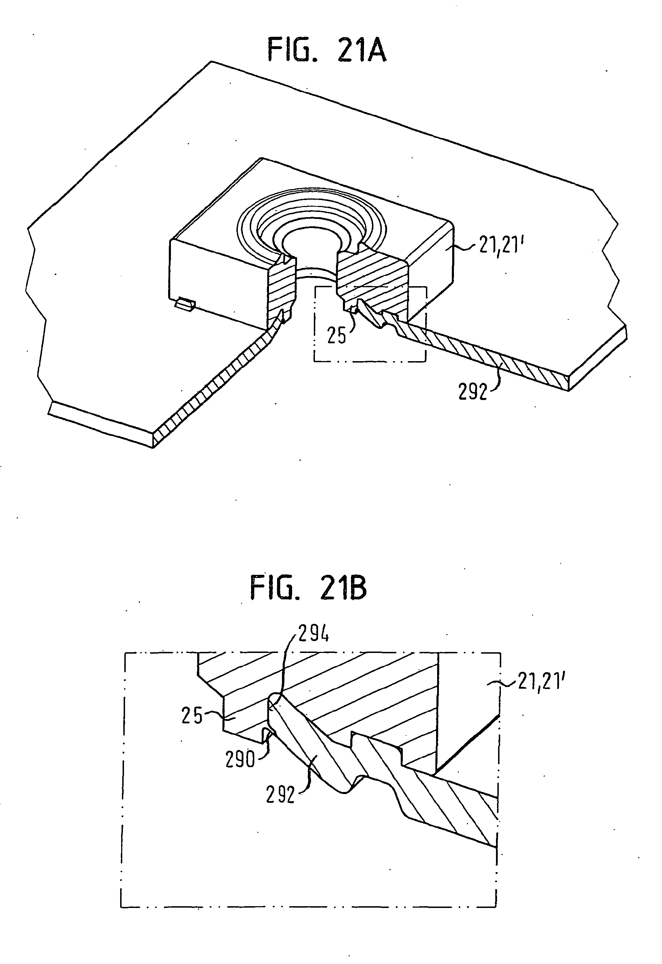

Die Fig. 11A bis 11C zeigen ein Hohlkörperelement das dem Mutterelement der Fig. 7A bis 7D weitestgehend entspricht jedoch unter Anwendung des Profils 1 gemäß Fig. 1 hergestellt wurde. Es sind somit keine Hinterschneidungen am Element festzustellen. Das Element wird entweder selbststanzend in ein Blechteil oder nicht selbststanzend in ein vorgelochtes Blechteil eingebracht und es wird dann, wie in den Fig. 21A und 21B für ein anderes Beispiel gezeigt, eine ringförmige Wulst 290 durch Verschiebung vom Material von der Stirnseite des Pilotteils 25 mittels einer geeigneten Matrize gebildet, die eine Hinterschneidung schafft und das Blechteil 292 im Bereich des Lochrandes 294 zwischen sich selbst und dem Boden 5 der Nut einklemmt.

Anstelle eine ringförmige Wulst konnten auch diskrete Materialnasen zur Anwendung gelangen, die ebenfalls durch Verschiebung vom Material von der Stirnseite des Pilotteils 25 mittels einer geeigneten Matrize ausgebildet sind, wie an sich bekannt ist.

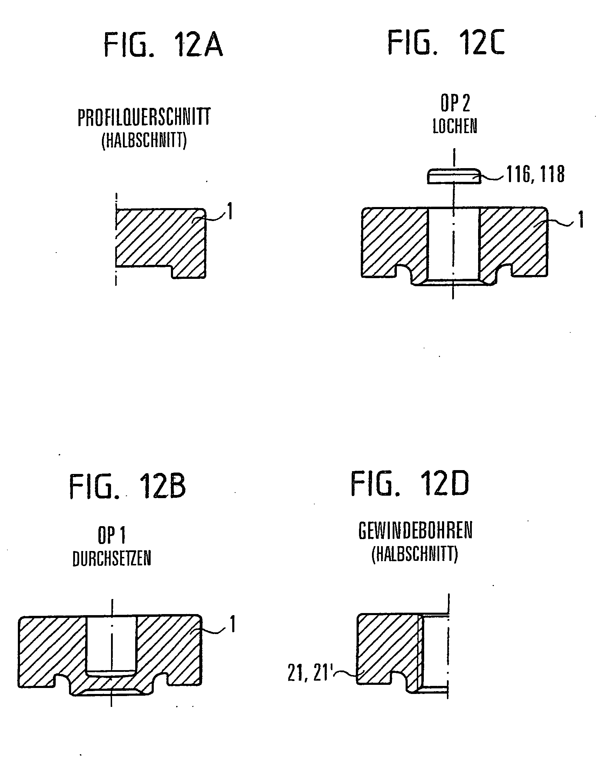

Die Fig. 12A bis 12D zeigen wie das Element der Fig. 11A bis 11C durch Arbeiten von entgegengesetzten Seiten des Profils 1 analog den Fig. 2 und 3 hergestellt werden kann, und zwar mit lediglich drei Arbeitschritten (Durchsetzen, Lochen und Abtrennen (Abtrennen nicht gezeigt)). Dabei kann der Durchsetzvorgang mit der Ausbildung der Fase kombiniert werden, wie in den Fig. 13A bis 13E vor Allem in Fig. 13B gezeigt ist, wobei die Fig. 13A bis 13E zeigen die Bearbeitung des Profilstreifens mit dem Durchsetzstempel und dem Lochstempel auf der gleichen Seite des Profilstreifens 1.

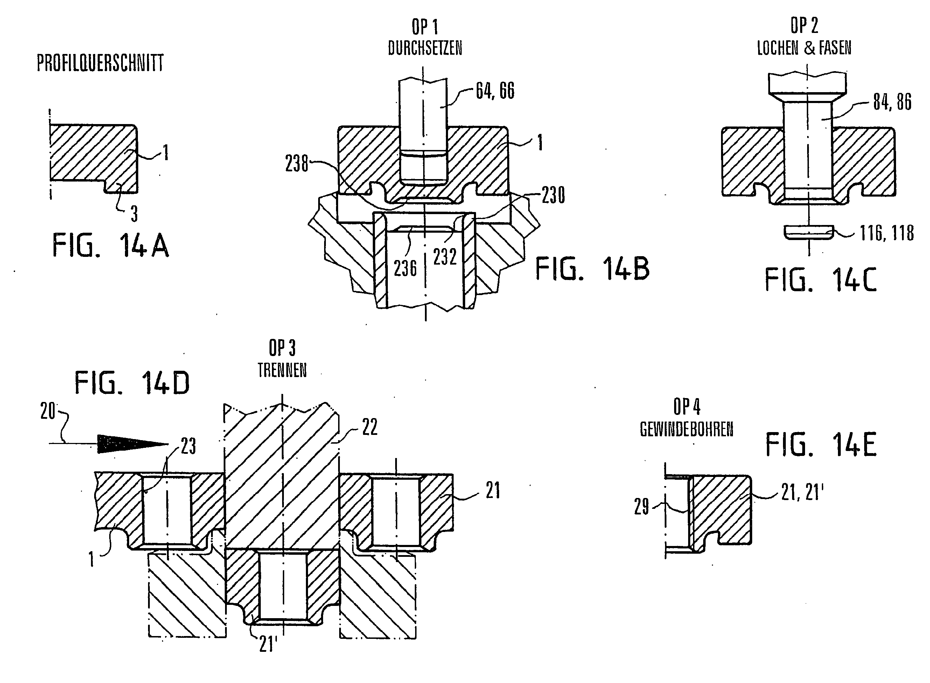

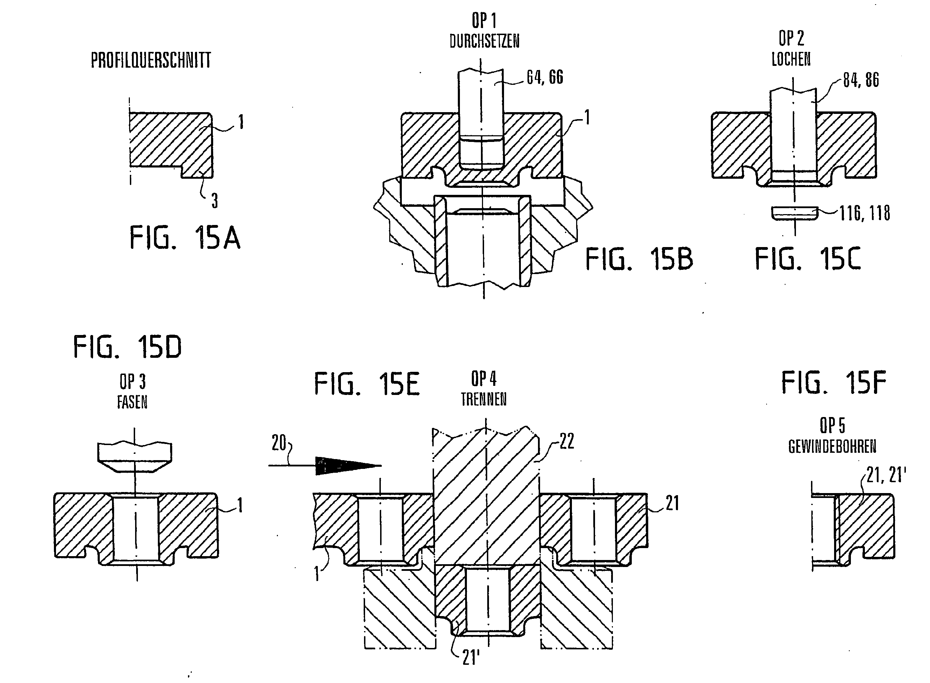

Sollte eine Ringfase am Gewindeauslauf erwünscht sein, kann sie durch Verwendung eines Lochstempels mit einer konusförmigen Ringschulter erzeugt werden, wie in der Ausführungsvariante gemäß Fig. 14A bis 14E, vor Allem in Fig. 14C gezeigt ist. Stattdessen kann auch eine Ringfase am Gewindeauslauf durch einen zusätzlichen Arbeitsschritt erzeugt werden, wie in der Ausführung gemäß Fig. 15A bis 15F gezeigt ist. Hier wird in der Fig. 15D ein Fasenstempel benutzt.

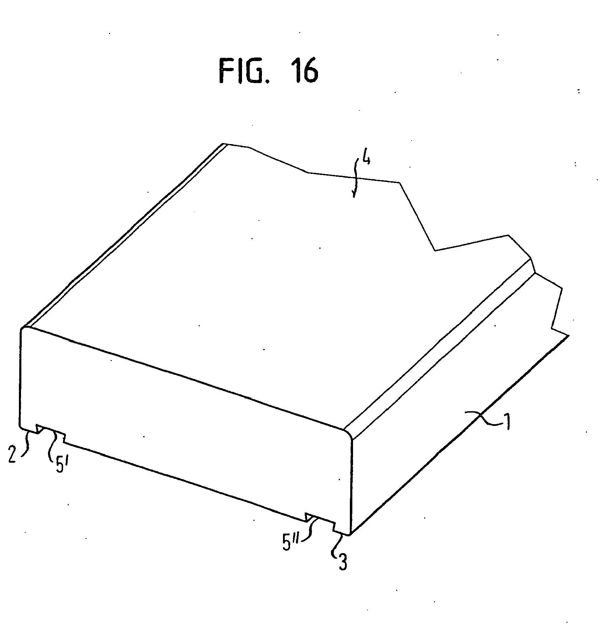

Auch kann ein Profil 1 gemäß Fig. 16 zur Anwendung gelangen. Hier sind zwei Balken 2, 3 vorgesehen die durch jeweilige Nuten 5', 5" begrenzt bzw. gebildet sind, die ebenfalls parallel zu den Längsseiten des Profils verlaufen, einen zumindest im Wesentlichen rechteckigen Querschnitt aufweisen sowie eine Tiefe haben, die der Höhe der jeweiligen Balken entspricht, wobei die eine Seite jeder Nut 5', 5", die eine Innenflanke des jeweiligen Balkens 2 bzw. 3 bildet und auch die zweite Seite jeder Nut 5' 5" schräg gestellt sind, so dass ein schwalbenschwanzartiger Nutquerschnitt vorliegt.

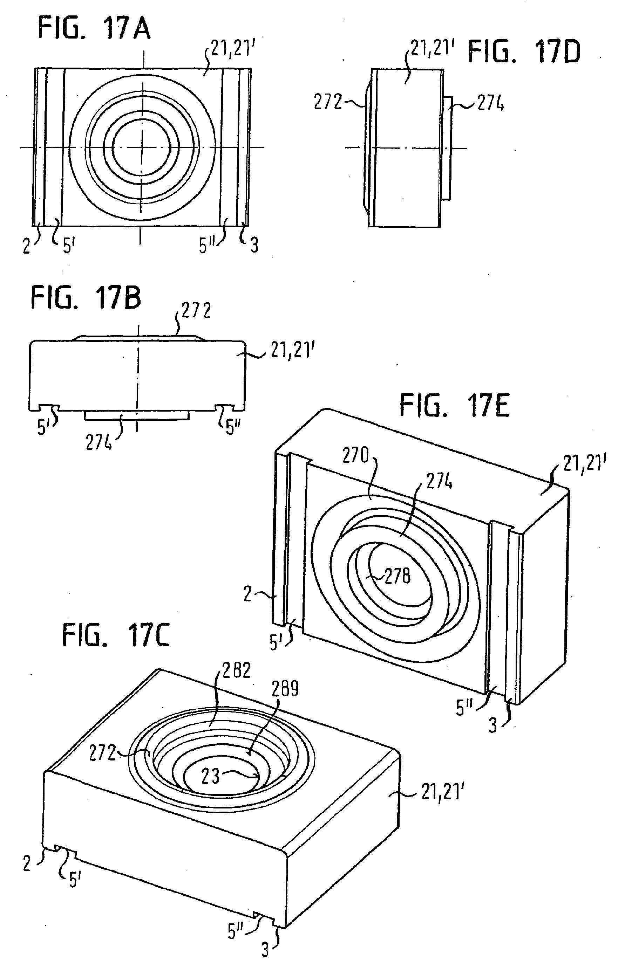

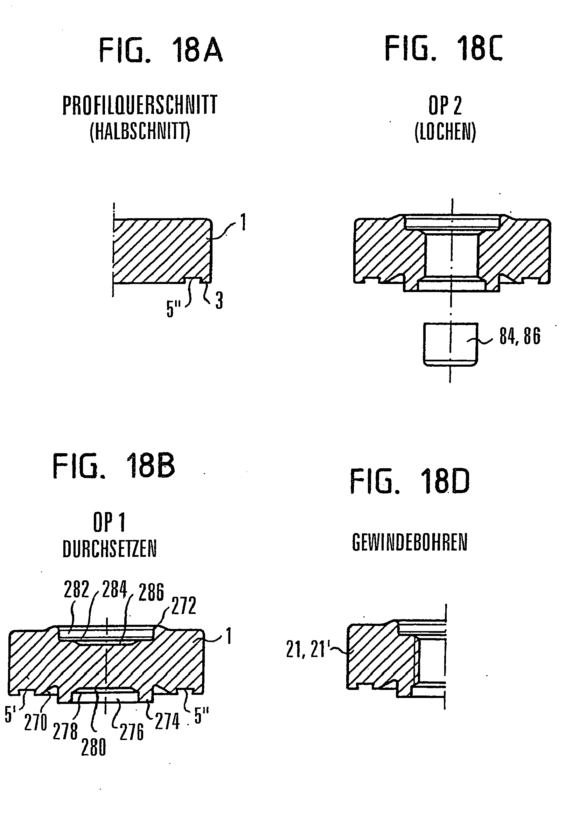

Wenn das Profil gemäß Fig. 16 zur Anwendung gelangt kann ein Element 21, 21' entsprechend den Fig. 17A bis 17E hergestellt werden. Dieses Element entspricht im Wesentlichen dem Element gemäß den Fig. 9A bis 9E der DE-Gbm 202 05 192.7, bis auf die besondere schwalbenschwanzartige Gestaltung der Nuten. Auch dieses Profil kann in einem Folgeverbundwerkzeug mit lediglich drei Arbeitsstationen einschließlich der Abtrennstation bearbeitet werden. Das Verfahren ist in den Fig. 18A bis 18D gezeigt, obwohl der Abtrennvorgang nicht dargestellt ist, da dieser Arbeitschritt wie bisher ausgeführt wird.

Es wird in einem ersten Durchsetzvorgang eine konusförmige Vertiefung 270 im Bereich des Profils 1 zwischen den beiden Nuten 5', 5" erzeugt, wobei gleichzeitig eine konusförmige Erhebung 272 auf der der Vertiefung 270 entgegengesetzten Seite des Profils 1 entsteht. Innerhalb der konusförmigen Vertiefung 270 wird gleichzeitig ein zylinderförmiger Vorsprung 274 mit einer mittleren Vertiefung 276 erzeugt, die über eine konusförmige Ringschulter 278 in eine Bodenfläche 280 übergeht, wobei auf der Seite der konusförmigen Erhebung 272, diese in der Mitte eine zylinderförmige Vertiefung 282 hat, die eine konusförmige Ringfläche 284 aufweist, die in eine Bodenfläche 286 übergeht. Der Durchsetzstempel und die Durchsetzmatrize (beide nicht gezeigt) sind an ihren Stirnenden entsprechend gestaltet, um die genannte Formgebung des Hohlkörperelementes zu erreichen.

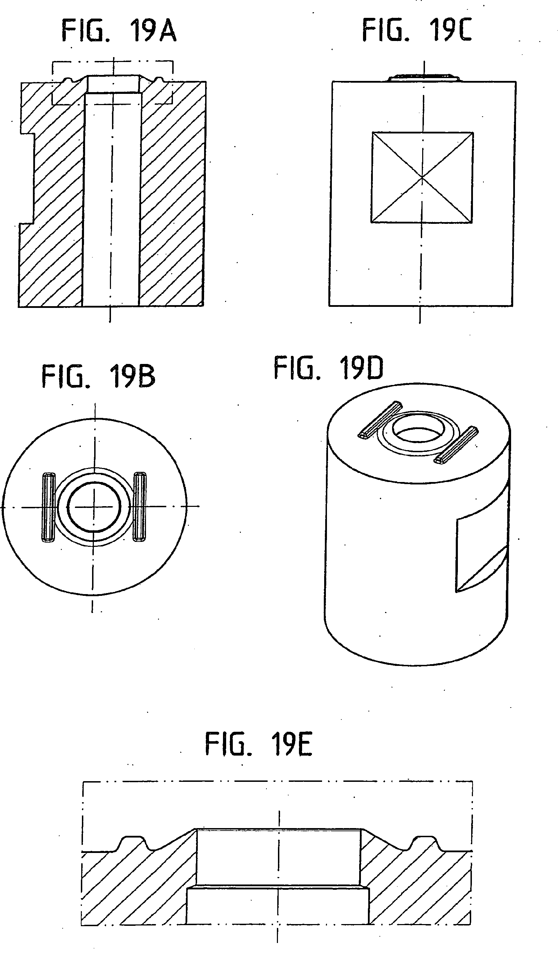

Nach dem Durchsetzvorgang wird ein Lochvorgang mittels eines Lochstempels durchgeführt und anschließend werden die Elemente vom Profil abgetrennt und gegebenenfalls ein Gewinde im gelochten Bereich erzeugt. Die konusförmige Ringschulter 278 auf der Seite der konusförmigen Vertiefung 270 und die konusförmige Ringschulter 284 auf der Seite der konusförmigen Erhebung 272 bilden eine Einführhilfe für eine Schraube bzw. eine Ringfase am Gewindeauslauf. Die Matrize zur Anbringung der Hohlkörperelemente an ein Blechteil ist in den Fig. 19A bis 19C gezeigt und entspricht weitestgehend der Matrize gemäß den Fig. 12A, 12B der genannten WO-Schrift.

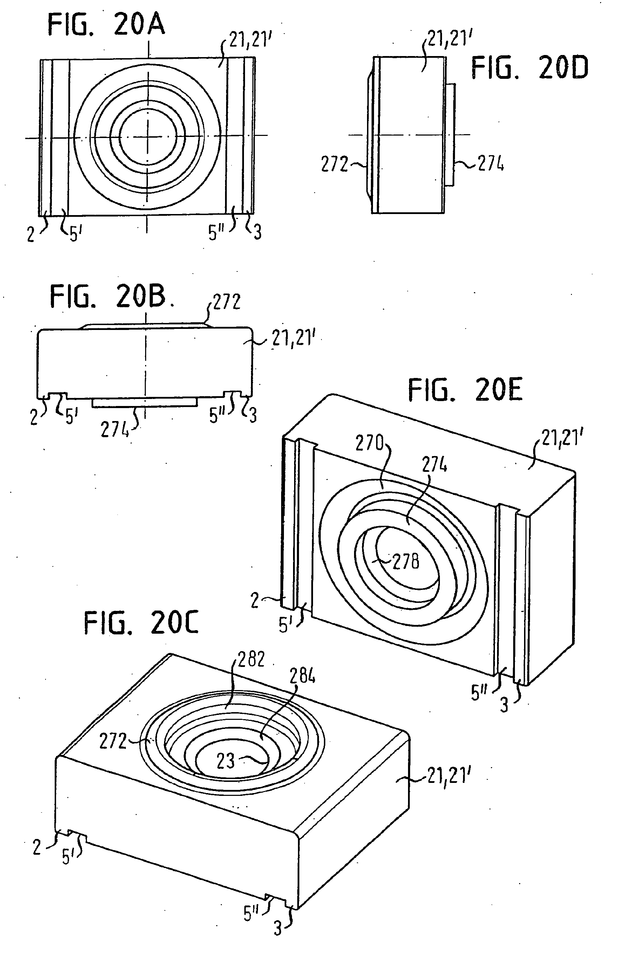

Anstatt das Profil gemäß Fig. 16 zu verwenden kann ein Profil entsprechend der Fig. 8 der WO 01/72449 zur Anwendung gelangen, bei dem die Seiten der Nuten, die die inneren Flanken der Balken und die äußeren Flanken des mittleren Bereichs des Profils bilden, senkrecht zur Unterseite bzw. Oberseite des Profils stehen. Die Form des fertig gestellten Hohlkörperelements entspricht der in den Fig. 20A bis 20C gezeigten Form, wobei diese Form wiederum der Form der Hohlkörperelemente gemäß den Fig. )A bis 9E der genannten WO-Schrift bis auf die Formgebung des Pilotteils 25, das hier keine Hinterschneidung aufweist. Das Element wird am Blechteil entsprechend den Fig. 21A und 21B befestigt, die bereits oben beschrieben worden sind.

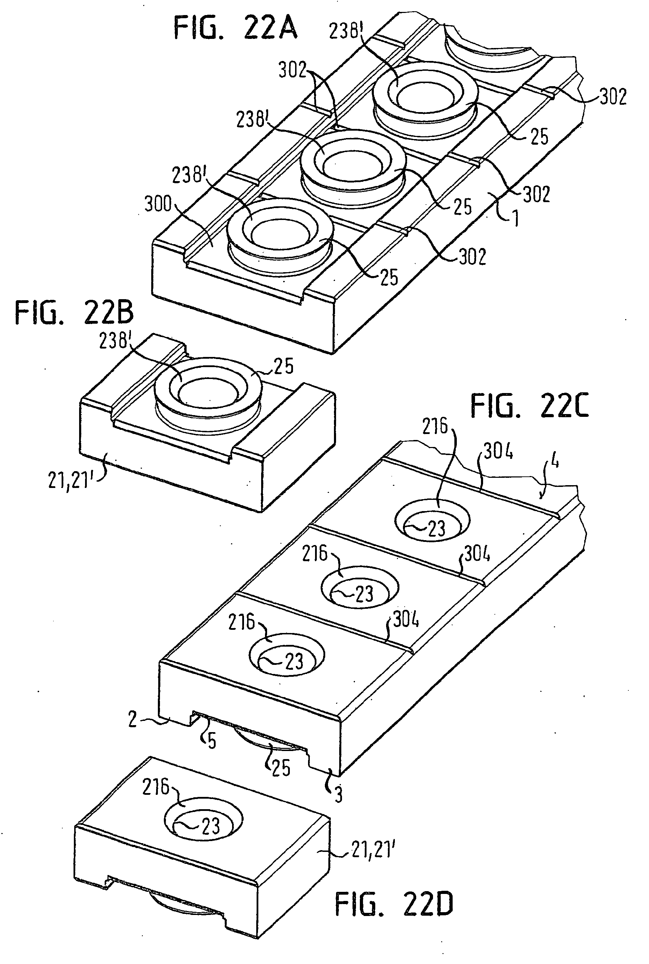

Besonders günstig ist es wenn ein Profil 1 entsprechend der Fig. 22A bzw. Fig. 22C zur Anwendung kommt. Hier weist das Profil 1 vor der Abtrennung der Hohlkörperelemente vom Profil an der bei Anbringung der Hohlkörperelemente an einem Bauteil diesem zugewandten Seite 300 und/oder an der entgegengesetzten Seite 4 quer verlaufende Kerben 302 bzw. 304auf, die an den Stellen vorliegen, an denen die fertigen Hohlkörperelemente 21, 21' vom Profil abgetrennt werden, wodurch die Kerben sozusagen Schwachstellen an den vorgesehenen Abtrennstellen bilden. Die Kerben 302 bzw. 304 können im Folgeverbundwerkzeug erzeugt werden, bspw. in einer weiteren Arbeitsstation oder kombiniert mit einem bereits vorgesehenen Arbeitsschritt. Stattdessen können sie in das Profil 1 bei dessen Herstellung eingewälzt oder anderweitig eingebracht werden.

Ferner besteht die Möglichkeit, dass die Hohlkörperelemente im Folgeverbundwerkzeug nicht voneinander vereinzelt werden, sondern das Profil 1 nach Herstellung der allgemeinen Form der Hohlkörperelemente in Abschnitten oder in wieder aufgewickelter Form beibehalten bzw. verwendet wird und eine Vereinzelung in einzelne Hohlkörperelemente 21, 21' erst dann stattfindet, wenn das Profil 1 in einem Setzkopf zur Anbringung der Hohlkörperelemente an einem Bauteil verwendet wird. Diese Vorgehensweise würde die Zufuhr an den Setzkopf erleichtern.

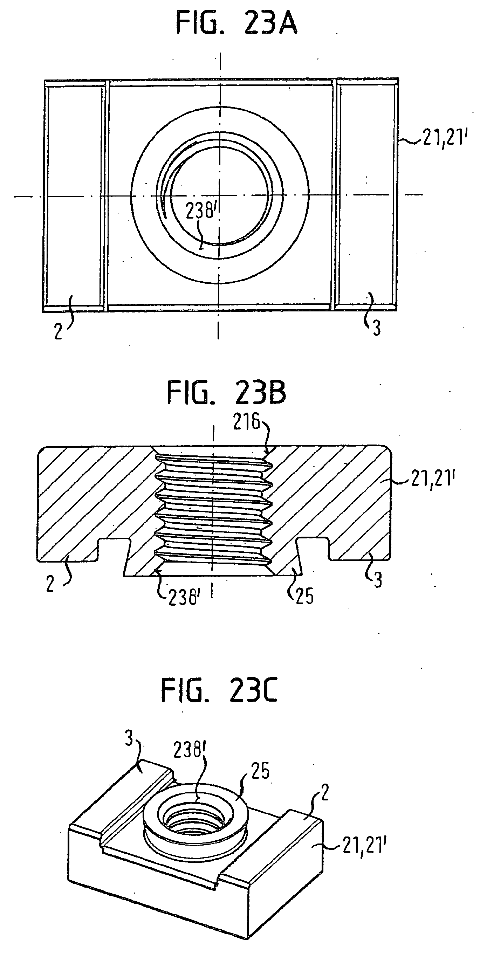

Das Konzept der Kerben kann auch mit anderen Profilstreifen verwendet werden, bspw. mit allen in dieser Anmeldung genannten oder im Stand der Technik bekannten Profilstreifen. Bei Verwendung eines Profilstreifens gemäß Fig. 1 könnten Hohlkörperelemente gemäß Fig. 23A bis 23C hergestellt werden.

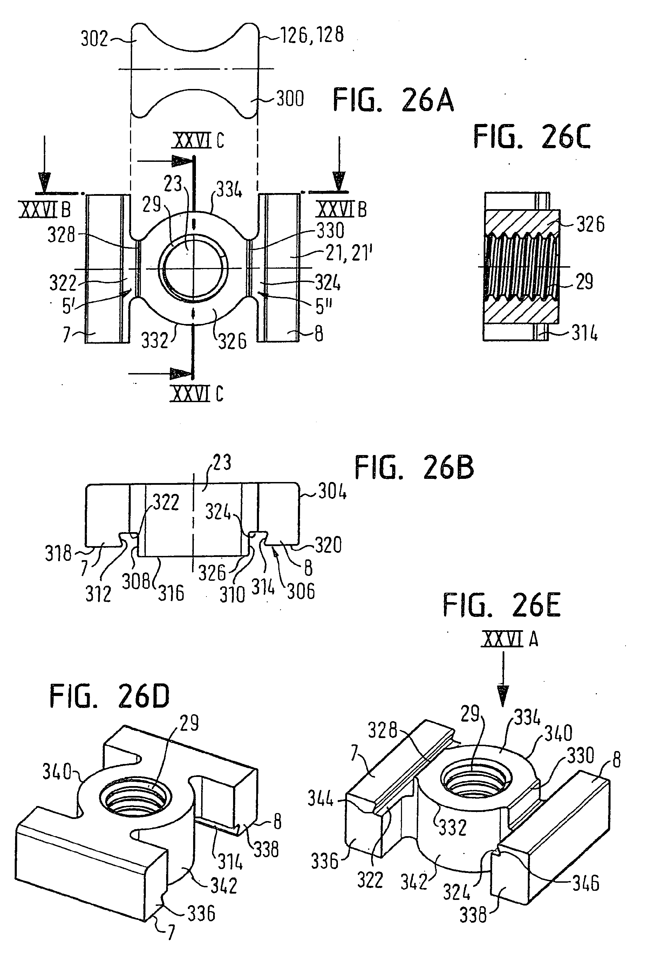

Ferner besteht die Möglichkeit, einen Profilstreifen gemäß den Fig. 24A und 26A zu erzeugen Zu diesem Zweck wird das Folgeverbundwerkzeug nach den Fig. 4 und 5 verwendet. Hier wird in der Arbeitsstation A ein Freischnittvorgang durchgeführt, um an den Grenzen zwischen den einzelnen noch nicht voneinander getrennten Hohlkörperelementen Löcher im Profil zu stanzen, beispielsweise Langlöcher 6 oder mehrere im Querschnitt kreisförmige Löcher, die quer zur Längsrichtung des Profils bzw. in einer Reihe quer zur Längsrichtung des Profils angeordnet sind, um die spätere Vereinzelung der Hohlkörperelemente 21, 21'mittels des Abschlagstempels 22 zu erleichtern. Bei dieser Ausführung wird der Freischnittvorgang vorzugsweise als erster Arbeitsschritt im Folgeverbundwerkzeug 10 durchgeführt.

Auch bei einer solchen Ausführung ist es nicht notwendig, die Hohlkörperelemente im Folgeverbundwerkzeug voneinander zu trennen, sondern das Profil kann nach Herstellung der allgemeinen Form der Hohlkörperelemente in Abschnitten oder in wieder aufgewickelter Form beibehalten bzw. verwendet werden, wobei eine Vereinzelung in einzelne Hohlkörperelemente erst dann stattfindet, wenn das Profil in einem Setzkopf zur Anbringung der Hohlkörperelemente an einem Bauteil verwendet wird.

Die Langlöcher 6 bzw. die Reihe von zylindrischen Löchern (nicht gezeigt) sollten sich vorzugsweise nicht in Bereiche des Profils hinein erstrecken, in denen die Balken 7, 8 vorgesehen sind, da die Länge der Balken für die Verdrehsicherung von Bedeutung ist, wobei es zulässig wäre, ein Loch in jedem Balkenbereich vorzusehen, sofern die Balken hierdurch nicht unerwünscht verkürzt werden.

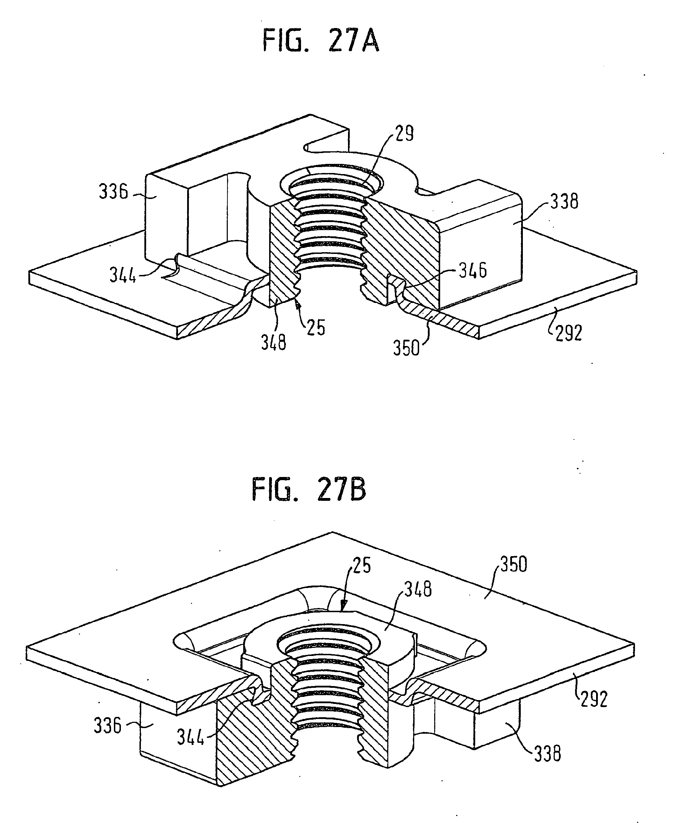

Die Fig. 26A-26E zeigen ein weiteres Beispiel eines erfindungsgemäßen Hohlkörperelementes, wobei die Fig. 27A und Fig. 27B das gleiche Element nach Anbringung an ein Blechteil zeigen.

Das Hohlkörperelement gemäß Fig. 27A und Fig. 27B wird unter Anwendung der Vorrichtung gemäß Fig. 5 hergestellt, und zwar unter Anwendung von Freischnittstempeln 126, 128, die jeweils einen Querschnitt mit der Form einer Sanduhr oder eines Pollers aufweisen.

Diese Querschnittsform ist in Fig. 26A eingezeichnet, und es ist ersichtlich, dass die Ausschnitte oberhalb und unterhalb des mittleren Teils des Hohlkörperelements 21 in Draufsicht jeweils die Form des halben Querschnitts 300 bzw. 302 des Freischnittstempels aufweisen.

Das Verfahren wird vorzugsweise mit einem Profil durchgeführt, das im Querschnitt die Form aufweist, die durch den Außenumriss 304 der Fig. 26B angegeben ist. Wie dort ersichtlich, ist der Querschnitt zumindest im Wesentlichen rechteckig, mit auf der später dem Bauteil 292, Fig. 27A und 27B zugewandten Bauteilseite 306 zwei voneinander einen Abstand aufweisenden parallel zu den Längsseiten des Profils verlaufenden und im Querschnitt ebenfalls zumindest im Wesentlichen rechteckigen Balken 7, 8, die auf der inneren Seite durch jeweilige, ebenfalls in Längsrichtung des Profils verlaufenden Nuten 5', 5" begrenzt sind. Die jeweils inneren Seiten 308, 310 der Nuten sind höher als die jeweils äußeren Seiten 312, 314, die den jeweiligen Balken begrenzen, wodurch im mittleren Bereich der Längsseite des Profils ein im Querschnitt rechteckiger Vorsprung 316 vorliegt, dessen dem Bauteil zugewandte Seite weiter vorspringt als die dem Bauteil zugewandten Seiten 318, 320 der Balken. Die jeweils äußeren Seiten 312, 314 der Nuten sind zur Bildung von Hinterschneidungen geneigt sind. Es wäre auch denkbar, die jeweils inneren Seiten 308, 310 der Nuten ebenfalls oder anstatt der äußeren Seiten der Nuten in eine geneigte Position zu setzen, um Hinterschneidungen zu bilden.

Mit anderen Worten sind zur Ausbildung von Nuten mit je mindestens einer Hinterschneidung die jeweils äußeren Seiten 312, 314 der Nuten 5', 5" und/oder die jeweils inneren Seiten 308, 310 der Nuten ausgehend von dem vorzugsweise parallel zur genannten Bauteilseite verlaufenden Böden 322, 324 der Nuten aufeinander zu bzw. voneinander weg geneigt. Mit einer solchen Querschnittsform des verwendeten Profils wird die Herstellung der Hohlkörperelemente vereinfacht, da die Form des Vorsprungs am fertig gestellten Hohlkörperelement durch den verwendeten Profilstreifen und die Querschnittsform der Freischnittstempel bestimmt wird und nicht durch Verformung des Profilstreifens. Es ist lediglich notwendig, das Loch im mittleren Bereich des Steges des in Draufsicht in etwa I-förmigen Hohlkörperelements durch Napf- und Lochvorgänge zu erzeugen. Diese Vorgänge sorgen durch Kaltverfestigung für eine erhöhte Festigkeit des Hohlkörperelements im Bereich des anschließend gebildeten Gewindes 29.

Anstatt ein Profil mit einer Querschnittsform entsprechend dem Bezugszeichen 304 der Fig. 26B zu verwenden, kann man auch das Profil gemäß Fig. 1 verwenden und den Vorsprung 25 mit einem entsprechenden Durchsetzvorgang erzeugen. D.h., dass in diesem Beispiel ein Profil zur Anwendung gelangt, das im Querschnitt zumindest im Wesentlichen rechteckig ist, mit auf der später dem Bauteil zugewandten Bauteilseite zwei voneinander einen Abstand aufweisenden, parallel zu den Längsseiten des Profils verlaufenden und im Querschnitt ebenfalls zumindest im Wesentlichen rechteckigen Balken 7, 8. Diese sind durch eine im Vergleich zu den Balken breitere, im Querschnitt rechteckige Nut 5 voneinander getrennt bzw. gebildet sind, die eine Tiefe aufweist, welche der Höhe der jeweiligen Balken zumindest im Wesentlichen entspricht.

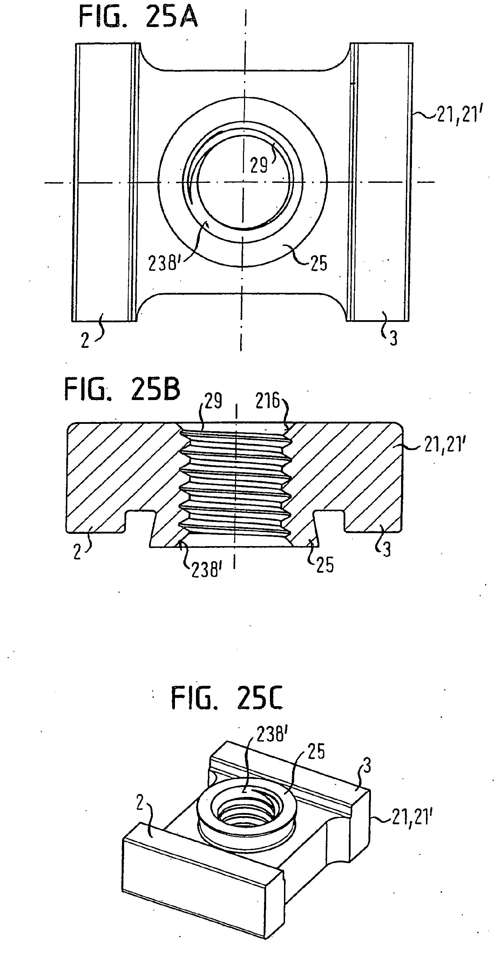

Andere Profile könnten ebenfalls zur Anwendung gelangen, in denen Ausschnitte durch Ausschnittstempel hergestellt werden, wie im Zusammenhang mit den Fig. 24 bis 27 beschrieben ist. Beispielsweise könnte das Profil ein im Querschnitt rechteckiges Profil ohne Balken sein oder es könnte als im Querschnitt rechteckiges Profil mit auf einer Seite einen in der Mitte angeordneten, im Querschnitt rechteckigen Balken wie 316 in Fig. 26 ausgebildet werden. Der mittlere Balken 316 würde dann Seiten entsprechend den Flanken 308 und 310 in Fig. 26 bilden, welche nach Anbringung des Elements in ein Blechteil die Verdrehsicherung schaffen würde. Diese Seiten entsprechend den Flanken 308 und 310 in Fig. 26 könnten auch geneigt werden, wie ebenfalls im Zusammenhang mit Fig. 26 beschrieben, um Hinterschneidungen und daher eine Sicherheit gegen Auspressen zu schaffen, wenn ein Hohlkörperelement, das aus dem Profil gebildet ist, an ein Blechteil angebracht ist. Falls die Seiten, die den Flanken 308 und 310 entsprechen, nicht geneigt sind, um hierdurch eine Hinterschneidung zu bilden, kann die erforderliche Sicherheit gegen Auspressen auch dadurch erreicht werden, dass Metall vom Pilotabschnitt 25 verformt oder geprägt wird, bspw. im Sinne einer Verschiebung vom Metall des Elements, um das Blechteil zu überlappen, wie ebenfalls in Verbindung mit anderen Ausführungsformen oben beschrieben wurde.

Da das Profil der Fig. 1 Balken 7, 8 verwendet, die keine geneigte innere Seite aufweisen, muss der Vorsprung 25 mit einer Hinterschneidung erzeugt werden, beispielsweise entsprechend den Fig. 6A bis 6F. Alternativ hierzu kann ein Profilstreifen ähnlich der Fig. 1 verwendet werden, bei dem aber die inneren Seiten der Balken, d.h. die Seiten der Nut 5, zur Bodenfläche der Nut 5 geneigt sind, um Hinterschneidungen zu bilden. D.h. die Balken weisen jeweils auf der inneren Seite eine schräg gestellte Flanke auf, welche eine Hinterschneidung bildet. Diese Ausführungsvariante kann mit einem Vorsprung 25 realisiert werden, der entweder eine Hinterschneidung oder keine Hinterschneidung aufweist.

Das Ergebnis der verschiedenen Herstellungsverfahren ist vorzugsweise so, dass in der Mitte des Hohlkörperelements auf der Bauteilseite 306 ein Vorsprung 25 ausgebildet ist. Das als Stanzabschnitt ausgebildete Stirnende 326 des Vorsprungs 25 ragt über die Höhe der dem Bauteil zugewandten Seiten der Balken hinaus und weist in Draufsicht im Bereich der Balken parallel zu dieser verlaufende Kanten 328, 330 auf. Diese sind über zwei teilkreisförmige Kanten 332, 334, die der Seitenform des Freischnittstempels entsprechen, miteinander verbunden und verlaufen konzentrisch zur mittleren Lochung 23 des Elements.

Das Hohlkörperelement zur Anbringung an ein insbesondere aus Blech bestehendes Bauteil 292 hat somit auf zwei entgegengesetzten Seiten parallel zueinander erstreckende Balken 7, 8, die mit dem Bauteil 292 eine Verdrehsicherung bilden, und eine senkrecht zur Bauteilseite verlaufende, mittig angeordnete Lochung 23, die gegebenenfalls einen Gewindezylinder 29 aufweisen kann. Es zeichnet sich dadurch aus, dass auf der dem Bauteil zugewandten Bauteilseite 306 des Hohlkörperelements 21, 21' und konzentrisch zur Lochung 23 ein ringförmiger Vorsprung 25 vorliegt, der als Stanzabschnitt mit oder ohne Hinterschneidung ausgebildet ist. Ferner weist der vorspringende Stanzabschnitt 25 im Bereich jedes Balkens 7, 8 in Draufsicht eine jeweilige Kante 328, 330 auf, die zumindest im Wesentlichen parallel zur benachbarten Seitenwand 312, 314 des jeweiligen Balkens 7, 8 verläuft. Zwischen den Balken 7, 8 und dem vorspringenden Stanzabschnitt 25 liegen jeweilige vertiefte Bereiche 322, 324 vor. Die einander zugewandten Seitenflächen 312, 314 der Balken 7, 8 bilden eine jeweilige Hinterschneidung und/oder der Stanzabschnitt 25 weist eine Hinterschneidung auf. Das Hohlkörperelement ist in Draufsicht zumindest in etwa I-förmig, wobei der mittlere, die Querglieder 336, 338 der I-Form verbindende Steg 340 in der Mitte und in Draufsicht zumindest im Wesentlichen kreisrund ist und durch einen zylindrischen Bereich 342 des Steges 340 gebildet ist.

Aus den Schnittzeichnungen der Fig. 27A und 27B ist ersichtlich, dass das Blechmaterial durch Anwendung einer entsprechend geformten Matrize (nicht gezeigt) in die Nuten 5', 5" und in die Hinterschneidungen 344, 346 benachbart zu den Balken 7, 8 eingeformt ist und das Element 21, 21' somit gegen Anpresskräfte gesichert ist, wobei die Balken zugleich für eine hohe Verdrehsicherung sorgen.

Ferner ist ersichtlich, dass die Stirnseite 348 des Stanzabschnitts 25 in einer Ebene mit der dem Hohlkörperelement abgewandten Seite 350 des Blechteils liegt, so dass sich eine gute Anschraubsituation ergibt. Ferner ist ersichtlich, dass die Blechverformungen im Bereich des Stanzabschnitts 25 alle gerundet sind, so dass ein guter Widerstand gegen Ermüdung zu erwarten ist.

Bei allen Ausführungsformen können als Beispiel für den Werkstoff des Profils und der daraus hergestellten Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Funktionselemente benutzt werden, z.B. AlMg5. Auch kommen Profile bzw. Funktionselemente aus höherfesten Magnesiumlegierungen wie bspw. AM50 in Frage.

Ferner soll zum Ausdruck gebracht werden, dass das Profil 1 bzw. jedes Profil erfindungsgemäß seitlich streng geführt ist, beispielsweise durch feststehende Führungen, sich jedoch geringfügig in Richtung quer zur Bewegungsbahn 20 seitlich ausdehnen kann. Ferner kann sich das bzw. jedes Profil 1 nach oben frei ausdehnen. Außerdem ist es erfindungsgemäß möglich, insbesondere bei Ausführungen, bei denen im Profil an der Trennstelle zwischen den Elementen Schwachstellen, beispielsweise Kerben oder Freischnitte, vorgesehen sind, dass die Hohlkörperelemente im Folgeverbundwerkzeug nicht voneinander vereinzelt werden, sondern das Profil nach Herstellung der Hohlkörperelemente in Abschnitten oder in wieder aufgewickelter Form verwendet wird und eine Vereinzelung in einzelne Hohlkörperelemente erst dann stattfindet, wenn das Profil in einem Setzkopf zur Anbringung der Hohlkörperelemente an einem Bauteil verwendet wird.

## Patentansprüche

1. Hohlkörperelement (21, 21') zur Anbringung an ein insbesondere aus Blech bestehendes Bauteil (292), wobei das Hohlkörperelement auf zwei entgegengesetzten Seiten parallel zueinander erstreckende Balken (7, 8), die mit dem Bauteil eine Verdrehsicherung bilden und eine senkrecht zur Bauteilseite verlaufende, mittig angeordnete Lochung (23) aufweist, die gegebenenfalls einen Gewindezylinder (29) aufweisen kann,
**dadurch gekennzeichnet,**
**dass auf** der dem Bauteil zugewandten Seite des Hohlkörperelementes und konzentrisch zur Lochung ein ringförmiger Vorsprung (25) vorliegt, der als Stanzabschnitt ohne Hinterschneidung ausgebildet ist, dass zwischen den Balken (7, 8) und dem ringförmigen Stanzabschnitt ein vertiefter Bereich vorliegt, wobei Balken nur auf zwei entgegengesetzten Seiten der Hohlkörperelements vorhanden sind und Anlageflächen für das Bauteil bilden, die so groß sind, dass die Flächenpressung unter der Fließgrenze des Bauteils liegt und dass auch die Balken (7, 8) keine Hinterschneidung mit dem vertieften Bereich bilden, wobei auf der Bauteilseite des Hohlkörperelementes die Stirnseite des ringförmigen Vorsprungs (25) vorzugsweise weiter vorsteht als die Balken (7, 8).

2. Hohlkörperelement nach Anspruch 1,
**dadurch gekennzeichnet,**
**dass** der vertiefte Bereich (5) zwischen den Balken (7, 8) im Außenumriss zumindest im wesentlichen rechteckig ist und dass der Ringvorsprung (25) in der Mitte der Vertiefung angeordnet ist und an allen Seiten einen Abstand von der Begrenzung der Vertiefung aufweist.

3. Hohlkörperelement nach einem der Ansprüche 1 oder 2,
**dadurch gekennzeichnet,**
**dass** die zwei auf entgegengesetzten Seiten des Hohlkörperelementes parallel zueinander erstreckende Balken (7, 8) durch zwei ebenfalls parallel zueinander verlaufende Nuten (5', 5") begrenzt bzw. gebildet sind, die zumindest im Wesentlichen einen rechteckigen Querschnitt aufweisen und dass die Vertiefung (270) eine konusförmige Vertiefung ist, die in der Bauteilseite des Hohlkörperelementes im Bereich zwischen den zwei Nuten ausgebildet ist, wobei die konusförmige Vertiefung (270) in Richtung auf die Bauteilseite zugehend divergiert, wobei vorzugsweise auf der der Bauteilseite abgewandten Seite des Hohlkörperelementes eine konusförmige Ringschulter (272) vorliegt mit in etwa komplementärer Form zu der konusförmigen Ringvertiefung (270) in der Bauteilseite des Elements.

4. Hohlkörperelement zur Anbringung an ein insbesondere aus Blech bestehendes Bauteil (292), wobei das Hohlkörperelement (21, 21') auf zwei entgegengesetzten Seiten parallel zueinander erstreckende Balken (7, 8), die mit dem Bauteil eine Verdrehsicherung bilden und eine senkrecht zur Bauteilseite verlaufende, mittig angeordnete Lochung (23) aufweist, die gegebenenfalls einen Gewindezylinder (29) aufweisen kann,
**dadurch gekennzeichnet,**
**dass** auf der dem Bauteil zugewandten Seite des Hohlkörperelementes (21, 21') und konzentrisch zur Lochung ein ringförmiger Vorsprung (25) vorliegt, der aus einer Vertiefung herausragt und als Stanzabschnitt mit oder ohne Hinterschneidung ausgebildet ist, dass auf der Bauteilseite des Hohlkörperelementes die Stirnseite des ringförmigen Vorsprungs (25) weiter vorsteht als die Balken (7, 8), dass die zwei auf entgegengesetzten Seiten des Hohlkörperelementes parallel zueinander erstreckende Balken (7, 8) durch zwei ebenfalls parallel zueinander verlaufende Nuten (5', 5") begrenzt bzw. gebildet sind, die entweder einen rechteckigen Querschnitt ohne Hinterschneidung aufweisen oder eine schwalbenschwanzartige Querschnittsform aufweisen, dass die Vertiefung eine konusförmige Vertiefung (270) ist, die in der Bauteilseite des Hohlkörperelementes im Bereich zwischen den zwei Nuten ausgebildet ist, wobei die konusförmige Vertiefung (272) in Richtung auf die Bauteilseite zugehend divergiert, wobei vorzugsweise auf der der Bauteilseite abgewandten Seite des Hohlkörperelementes eine konusförmige Ringschulter (272) vorliegt mit in etwa komplementärer Form zu der konusförmigen Ringvertiefung (270) in der Bauteilseite des Elements.

5. Hohlkörperelement zur Anbringung an ein insbesondere aus Blech bestehenden Bauteil (292), wobei das Hohlkörperelement auf zwei entgegengesetzten Seiten parallel zueinander erstreckende Balken (7, 8), die mit dem Bauteil (292) eine Verdrehsicherung bilden, und eine senkrecht zur Bauteilseite verlaufende, mittig angeordnete Lochung (23) aufweist, die gegebenenfalls einen Gewindezylinder (29) aufweisen kann,
**dadurch gekennzeichnet,**
**dass** auf der dem Bauteil zugewandten Bauteilseite (306) des Hohlkörperelements (21, 21') und konzentrisch zur Lochung (23) ein ringförmiger Vorsprung (25) vorliegt, der als Stanzabschnitt mit oder ohne Hinterschneidung ausgebildet ist, dass der vorspringende Stanzabschnitt (25) im Bereich jedes Balkens (7, 8) in Draufsicht eine jeweilige Kante (328, 330) aufweist, die zumindest im Wesentlichen parallel zur benachbarten Seitenwand (312, 314) des jeweiligen Balkens (7, 8) verläuft, dass zwischen den Balken (7, 8) und dem ringförmigen Stanzabschnitt (25) jeweilige vertiefte Bereiche (322, 324) vorliegen, dass die einander zugewandten Seitenflächen (312, 314) der Balken eine jeweilige Hinterschneidung (344, 346) bilden und/oder der Stanzabschnitt eine Hinterschneidung aufweist, und dass das Hohlkörperelement (21, 21') in Draufsicht zumindest in etwa I-förmig ist.

6. Hohlkörperelement nach Anspruch 5,
**dadurch gekennzeichnet, dass** der mittlere, die Querglieder (336, 338) der 1-Form verbindende Steg (340) in der Mitte angeordnet und in Draufsicht zumindest im Wesentlichen kreisrund ist und durch einen zylindrischen Bereich (342) des Steges (340) gebildet ist.
